# EUROPEAN PATENT APPLICATION

(11) **EP 4 841 605 A1**
(43) Date of publication of application: **18.11.2026**
(21) Application number: 25177110.1
(22) Date of filing: 16.05.2025
(51) Int. Cl.: G08G 1/01, G01C 21/36

(54) **METHOD AND PROCESSING SYSTEM FOR HAZARD IDENTIFICATION**

(71) Applicant: TomTom Traffic B.V., 1011 AC Amsterdam (NL)
(72) Inventor: Dieckmann, Claudia Christina, 1011 AC Amsterdam (NL); Wiesner, Steffen Gunther, 1011 AC Amsterdam (NL); Seiferth, Nadja, 1011 AC Amsterdam (NL); Lorenz, Christian, 1011 AC Amsterdam (NL); Zetzsche, Eric Richard Eduard, 1011 AC Amsterdam (NL)
(74) Representative: Meier, Florian

(57) **Abstract**

A processing system (20) is operative to identify hazards in a navigable network based on data (40) from several sources (50). The processing system (20) is operative to perform a hazard identification comprising a multi-source data fusion of the data (40). The processing system (20) is operative such that the multi-source data fusion comprises a spatiotemporal correlation of the data (40). The spatiotemporal correlation may comprise a spatial transform to a common spatial reference for spatially correlating the data (40) and application of a time-based filter. The processing system (20) is operative to perform or enable an action based at least on the hazard identification.

## Description

### TECHNICAL FIELD

Embodiments relate to techniques of identifying hazards for a navigable network. Embodiments relate in particular to techniques useful for identifying hazards to perform functions such as hazard warnings and/or a hazard-dependent adjustment of probe and/or vehicle functions.

### BACKGROUND

Hazard identification for navigable networks is a crucial process aimed at recognizing and evaluating potential dangers that have the potential to impact road users, including drivers, passengers, pedestrians, and/or cyclists. Hazard identification can contribute to safety improvement. By identifying hazards, proactive measures can be taken to reduce the risk of accidents and injuries.

Hazard identification results, such as slippery road warnings, can play a significant role in the operation of vehicles and/or probes. Hazard identification results can provide a vehicle control system with real-time information about potential dangers on a navigable network. For illustration, when a vehicle receives a slippery road warning, driving behavior (e.g., control strategies) can be adjusted accordingly to enhance safety. For illustration, the vehicle may be configured to reduce its speed to improve traction and help maintain control. Alternatively or additionally, the vehicle may be configured to modify its braking and acceleration patterns to prevent skidding. In some cases, an alternative route can be chosen to avoid areas known to be hazardous due to slippery conditions.

Alternatively or additionally, hazard identification results are usable by navigation and/or guidance systems. The vehicle can use the hazard identification results to optimize travel routes based on current road conditions, ensuring a safer journey. Additionally, communication with other vehicles and infrastructure (such as traffic signals and road signs) can enhance the effectiveness of hazard identification, creating a more connected and responsive driving environment.

Thus, techniques that enhance hazard identification can lead to improved safety and more efficient navigation. By responding dynamically to real-time hazard information, vehicles can significantly reduce the risks associated with driving in adverse conditions.

EP 3 302 732 A1, EP 3 214 610 A1, and US 9 430 944 B1 disclose techniques useful in association with hazard identification.

For both human recipients and automated systems, high precision, recall, and spatiotemporal accuracy of hazard information are essential. Missed hazardous conditions can pose significant risks to unprepared drivers or vehicles, while excessive false or misleading alerts can lead to alert fatigue, diminished trust, and reduced attention to issued warnings. In severe cases, this may even result in the deactivation of alert functionalities, further exposing users to unforeseen hazards.

Acquiring information about hazardous conditions with enhanced precision, recall, spatiotemporal accuracy, and detection speed presents considerable challenges. Hazardous situations are diverse, often localized, can develop rapidly, and are frequently volatile. The challenges are exacerbated by the fact that there is currently no single, reliable, and comprehensive source of information for imminent hazards across an entire road network, even within a single country.

Legacy techniques in which data can stem from any one of several sources generally required the several sources to provide data referenced to a common spatial and temporal reference system. This limited the applicability, precision, and/or spatiotemporal accuracy of hazard identification in such techniques.

Thus, there is a continued need for techniques that can provide improved hazard identification.

### SUMMARY

It is an object of embodiments to provide methods, systems, and/or machine-readable instruction code that provide enhanced techniques for hazard identification. It is in particular an object of embodiments to provide methods, systems, and/or machine-readable instruction code operative to identify hazards in a navigable network that allow hazardous conditions to be identified with enhanced precision and/or spatiotemporal accuracy.

According to embodiments, a method, a processing system, a system, and machine-readable instruction code as recited in the independent claims are provided. The dependent claims define preferred and advantageous embodiments.

According to an aspect, a method of identifying hazards in a navigable network is provided. The method comprises performing, by at least one processing system, a hazard identification. The hazard identification comprises a multi-source data fusion of data obtained from several sources. The multi-source data fusion comprises a spatiotemporal correlation of the data. The spatiotemporal correlation is performed for different ones of the several sources with the at least one processing system being operative to: perform, for at least some of the several sources, a spatial transform to a common spatial reference for spatially correlating the data; and apply, for temporally correlating the data, a time-based filter to identify which of the data obtained from the several sources is to be processed in combination in the hazard identification. The method comprises performing or enabling, by the at least one processing system, an action based at least on the hazard identification.

Various effects and advantages are associated with the method. By performing a multi-source data fusion, the hazard identification can be performed taking advantage of the combined information from the several sources. This allows hazards to be identified with enhanced precision and/or spatiotemporal accuracy of the hazard identification. With the multi-source data fusion comprising the spatiotemporal correlation, the hazard identification can accommodate several sources having different spatial and/or temporal references. The spatial correlation to a common reference frame facilitates multi-source data fusion by providing a unified coordinate system in which data from diverse sources can be aligned and integrated. This allows for the transformation of the data from different spatial reference frames into a common representation. Temporal correlation enables multi-source data fusion by establishing a common time reference that synchronizes data from various sources that may operate on different timing schemes. This synchronization ensures that events captured by different sensors or systems can be compared and analyzed in relation to one another. As a result, this spatiotemporal correlation enhances the overall quality and reliability of the hazard identification, leading to a more precise and/or spatiotemporally accurate identification of hazards. This improves the action(s) that are initiated or performed based at least on the hazard identification.

The at least one processing system may be operative to perform the spatial transform comprising a mapping between (i) network-referential data obtained from at least one of the several sources, the network-referential data being spatially referenced to navigable segments of the navigable network, and (ii) cell-referential data from at least another one of the several sources, the cell-referential data being spatially referenced to a cell set that overlaps with the navigable network.

Thereby, a spatial transformation is attained between data referenced to network elements of a road network and other data referenced to cells (such as tiles or hexagonal cells). This provides enhanced versatility in the multi-source data fusion by ensuring that the data from the several sources can be effectively aligned and analyzed within a common spatial context. The spatial mapping allows for the integration of dynamic traffic information with geospatial data, facilitating more accurate assessments of hazardous situations. The spatial transformation provides enhanced versatility in the multi-source data fusion, providing enhanced precision (e.g., by reducing the risk of false positives and/or false negatives in the hazard identification) and/or spatiotemporal accuracy of the hazard identification.

The at least one processing system may be operative to apply the time-based filter to discard a part of the data in performance of the hazard identification.

Thereby, the method enables the integration of time-dependent information from several sources while enabling temporally correlated data from different ones of the several sources to be identified. This approach allows for the detection of emerging hazards by analyzing patterns over time and improving situational awareness, which is useful for timely responses in navigation and/or vehicle operation. By applying the temporal filter, relevant temporal correlations are identified. This enhances the precision (e.g., by reducing the risk of false positives and/or false negatives in the hazard identification) and/or spatiotemporal accuracy of the hazard identification.

The time-based filter may comprise a sliding time window. The at least one processing system may delete part of the data obtained from the several sources from a data repository responsive to determining that the part relates to times earlier than a start time of the sliding time window.

Thereby, temporal correlations can be determined in an effective manner. This enhances the precision (e.g., by reducing the risk of false positives and/or false negatives in the hazard identification) and/or spatiotemporal accuracy of the hazard identification.

The at least one processing system may be operative to adjust a filter kernel of the time-based filter (e.g., a time window length of the time window).

Thereby, the spatiotemporal correlation is adjustable, based, e.g., on the sources that are available and/or the type of hazard to be identified. This enhances the precision (e.g., by reducing the risk of false positives and/or false negatives in the hazard identification) and/or spatiotemporal accuracy of the hazard identification.

The at least one processing system may be operative to adjust a filter kernel of the time-based filter (e.g., a time window length of the time window) based on a type of hazard to be identified in the hazard identification.

Thereby, enhanced precision (e.g., by reducing the risk of false positives and/or false negatives in the hazard identification) and/or spatiotemporal accuracy of the hazard identification is attained.

The at least one processing system may be operative to adjust a filter kernel of the time-based filter (e.g., a time window length of the time window) based on types of sources available for providing the data for the multi-source data fusion.

Thereby, enhanced precision (e.g., by reducing the risk of false positives and/or false negatives in the hazard identification) and/or spatiotemporal accuracy of the hazard identification is attained.

The at least one processing system may be operative to perform the spatial transformation between network-referential data and cell-referential data for cells that comprise tiles of a tile set that covers at least part of the navigable network.

Thereby, spatial transformations can be established to correlate data from several sources with reference to tiles that are useful in association with a navigable network. The operability of the at least one processing system to operate with sources that provide data with reference to such a tile set enhances the precision (e.g., by reducing the risk of false positives and/or false negatives in the hazard identification) and/or spatiotemporal accuracy of the hazard identification.

The set of tiles may define a hierarchical tile structure (such as a quadtree-based tile structure) comprising tiles having different tile sizes.

Thereby, spatial transformations can be established to correlate data from several sources with reference to a tile set that, due to its hierarchical structure, is particularly useful in association with storage of navigable network data. The operability of the at least one processing system to operate with sources that provide data with reference to the tile set enhances the precision (e.g., by reducing the risk of false positives and/or false negatives in the hazard identification) and/or spatiotemporal accuracy of the hazard identification.

The set of tiles may comprise tiles having a rectangular shape.

Thereby, spatial transformations can be established to correlate data from several sources with reference to a tile set that, due to its hierarchical structure, is particularly useful in association with storage of navigable networks. The operability of the at least one processing system to operate with sources that provide data with reference to such a tile set enhances the precision (e.g., by reducing the risk of false positives and/or false negatives in the hazard identification) and/or spatiotemporal accuracy of the hazard identification.

The spatial transformation may comprise accessing, by the at least one processing system, a tile index (such as a registered tile index) to determine in which tile a navigable segment is located to which at least part of the data pertains.

Thereby, spatial transformations can be established in an efficient manner, using a tile index to access network-specific storage structures.

The at least one processing system may be operative to perform the spatial transformation between network-referential data and cell-referential data for cells of a hexagonal grid (such as a H3 geospatial indexing system) that covers at least part of the navigable network and/or for Voronoi cells.

Thereby, spatial transformations can be established to correlate data from several sources with reference to a geospatial indexing system and/or Voronoi cells that are particularly useful in association with navigable networks. The operability of the at least one processing system to operate with sources that provide data with reference to such a tile set enhances the precision (e.g., by reducing the risk of false positives and/or false negatives in the hazard identification) and/or spatiotemporal accuracy of the hazard identification.

The at least one processing system may be operative to perform the spatial transformation between at least the following: a graph representation of the navigable network, where the navigable network comprises navigable segments (such as road segments); a subdivision of the Earth's surface into rectangular tiles based on longitude and latitude; a subdivision of the earth's surface by a hexagonal grid system, such as a fixed level of the H3 geospatial indexing system.

Thereby, spatial transformations can be established to correlate data from several sources that use different spatial reference frames.

The several sources may comprise different source types.

Thereby, robustness and reliability of the hazard identification and, consequently, of warnings and/or automated vehicle control operations are improved. The multi-source data fusion allows the at least one processing system to cross-verify data, overcoming limitations or inaccuracies inherent to a hazard identification that is based on a single source type only. The precision (e.g., by reducing the risk of false positives and/or false negatives in the hazard identification) and/or spatiotemporal accuracy of the hazard identification is improved thereby.

The several sources having different source types may comprise; one or several sources that are not based on probe data aggregated from probes on the navigable network; and/or one or several sources that use measurement instrumentation that is distinct from vehicle-based sensor instrumentation (such as measurement instrumentation that is based on sensors fixedly installed with respect to the navigable network and/or measurement instrumentation onboard of satellites and/or aircrafts).

Thereby, robustness and reliability of the hazard identification and, consequently, of warnings and/or automated vehicle control operations are improved. The multi-source data fusion allows the at least one processing system to cross-verify data, overcoming limitations or inaccuracies inherent to a hazard identification that is based on a single source type only. The precision (e.g., by reducing the risk of false positives and/or false negatives in the hazard identification) and/or spatiotemporal accuracy of the hazard identification is improved thereby.

The different source types may comprise sources operated by different operators and/or sources that provide data using different measurement instrumentation.

Thereby, robustness and reliability of the hazard identification and, consequently, of the at least one action (such as warnings and/or automated vehicle control operations) are improved. The precision (e.g., by reducing the risk of false positives and/or false negatives in the hazard identification) and/or spatiotemporal accuracy of the hazard identification is improved thereby.

The several sources may comprise at least one probe data source and at least one additional data source different from the at least one probe data source. The multi-source data fusion may combine probe data from the at least one probe data source and additional data from the at least one additional data source.

Thereby, robustness and reliability of the hazard identification and, consequently, of the at least one action (such as warnings and/or automated vehicle control operations) are improved. The precision (e.g., by reducing the risk of false positives and/or false negatives in the hazard identification) and/or spatiotemporal accuracy of the hazard identification is improved thereby.

The probe data may comprise and/or may be based on probe traces and/or probe speeds of probes located on the navigable network, wherein the at least one processing system processes the probe data in the hazard identification.

Thereby, at least one of the sources can provide data based on observations by probes on the navigable network. This allows data based on probes to be combined with other data from at least another one of the several sources in the multi-source data fusion, contributing to the robustness and reliability of the hazard identification. The precision (e.g., by reducing the risk of false positives and/or false negatives in the hazard identification) and/or spatiotemporal accuracy of the hazard identification is improved thereby.

The additional data may be different from probe data.

Thereby, data based on probes is combined with other data from at least another one of the several sources in the multi-source data fusion, contributing to the robustness and reliability of the hazard identification. The precision (e.g., by reducing the risk of false positives and/or false negatives in the hazard identification) and/or spatiotemporal accuracy of the hazard identification is improved thereby.

The hazard identification may comprise determining, based on the data from the several sources, a quantitative quality measure for a hazard identification result of the hazard identification.

Thereby, the quality of the hazard identification result is quantified. Such a quantitative measure that reflects the quality of the hazard identification in the navigable network allows action(s) to be performed or initiated, based on the quantitative quality measure. Such measures, e.g., uncertainty and/or confidences, allow users and/or automated systems to evaluate the credibility of the identified hazards, prioritize responses, and determine the action(s) to be performed based also on the quantitative quality measure. This facilitates automated processing, enabling more informed and timely actions to mitigate risks and improve safety on the road.

The quantitative quality measure may be determined in accordance with a quality metric.

Thereby, the quality of the hazard identification may be determined in an objective manner (e.g., by being indicative of an estimate for the ratio of false positives for hazards).

The at least one processing system may determine the quantitative quality measure (e.g., an uncertainty and/or confidence) based at least on the probe data for probes located on a navigable segment of the navigable network affected by a hazard identified in the hazard identification.

Thereby, the quality of the hazard identification may be quantified in an objective manner.

The quantitative quality measure may be determined using an artificial intelligence (AI) model, such as an ML model.

Thereby, the quality of the hazard identification may be quantified in a data-driven manner, using an Al model, e.g., an ML model, that provides output that is indicative of the uncertainty or confidence of the hazard identification result.

The quantitative quality measure may comprise confidence and/or uncertainty.

Thereby, the quality of the hazard identification may be quantified in an objective manner.

The quantitative quality measure may comprise confidence and/or uncertainty may be based at least on probe speed dynamics and/or dynamics.

Thereby, the quality of the hazard identification may be quantified in an objective manner.

The multi-source data fusion may comprise processing the data from the several sources using one, several, or all of: heuristic models; statistical models; Al models (e.g., ML models).

Thereby, the precision and/or accuracy of the hazard identification may be enhanced.

The multi-source data fusion may comprise selecting a processing technique for the data from: heuristic models; statistical models; Al models (e.g., ML models).

Thereby, the processing may be performed based on, e.g., which type of input data are available and/or which type of hazard is to be identified.

The multi-source data fusion may comprise selecting the processing technique based on whether a hazard classification, hazard severity, or confidence is to be determined.

Thereby, the processing may be performed based on, e.g., the output generated by the multi-source data fusion.

The multi-source data fusion may comprise selecting the processing technique based on the hazard type to be identified.

Thereby, the processing may be performed based on the type of hazard to be identified, to thereby improve the precision and/or accuracy of the hazard identification.

The multi-source data fusion may comprise selecting the processing technique based on the input data available for the multi-source data fusion (e.g., based on the types of sources).

Thereby, the processing may be performed based on the types of sources from which the data are available, to thereby improve the precision and/or accuracy of the hazard identification.

The method may comprise repeating, by the at least one processing system, the hazard identification.

Thereby, the method allows hazardous situations to be detected continually (i.e., in an ongoing manner), taking into account dynamic conditions that may change over time, such as traffic patterns, weather, and road conditions. This iterative approach enhances the accuracy and reliability of hazard assessments by adapting to new information, possibly in combination with validating previous hazard identification results. This ultimately contributes to more timely and effective safety measures. Furthermore, repeated identifications can help identify trends or emerging hazards.

The at least one processing system may repeat the hazard identification in an ongoing manner.

Thereby, the method allows hazardous situations to be detected continually (i.e., in an ongoing manner), taking into account dynamic conditions that may change over time. This iterative approach enhances the accuracy and reliability of hazard assessments and/or allows trends or emerging hazards to be identified.

The at least one processing system may repeat the hazard identification responsive to a trigger.

Thereby, the method allows hazardous situations to be detected in an event-based manner and/or in an ongoing manner.

The trigger may comprise a trigger event and/or expiry of a timer.

Thereby, the method allows hazardous situations to be detected in an event-based manner and/or in an ongoing manner.

Repeating the hazard identification may comprise a conditional repetition of the hazard identification, wherein a trigger for repeating the hazard identification is spatially varying and depends on whether a hazard has been established to exist for a road segment.

Thereby, the method allows a re-evaluation of hazardous situations and further also allows to identify new, not previously identified hazards in other locations.

The conditional repetition may comprise: adjusting a repetition rate of the hazard identification based on whether or not there is an existing hazard previously identified for a road segment.

Thereby, the method allows a re-evaluation of hazardous situations and further also allows to identify new, not previously identified hazards in other locations.

The conditional repetition may comprise: repeating the hazard identification continually (e.g., periodically) for any road segment for which there exists a previously identified hazard; and for any other road segment for which there is no active hazard, performing the hazard identification in an event-based manner responsive to receipt of new data related to the other road segment.

Thereby, the method allows a re-evaluation of hazardous situations and further also allows to identify new, not previously identified hazards in other locations, and does so in an efficient manner.

The hazard identification may comprise determining one, several, or all of: a hazard classification; a hazard severity; a measure of an impact on driver behavior; a recommendation for driving adaptation; adjustments to an advanced driver assistance system, ADAS; autonomous driving settings.

Thereby, the method allows the hazard and/or adjustments that should be performed responsive to the hazard identification result to be determined, using the multi-source data fusion.

The hazard identification may comprise determining and effecting one or both of: adjustments to an ADAS; autonomous driving settings.

Thereby, the hazard identification provides output that determines adjustments to vehicle control logics operation, e.g., to driver assistance (such as an ADAS) and/or operation of Level 3 (L3) or Level 4 (L4) autonomous vehicles. The method can thereby contribute to ensuring that the vehicle can adapt to dynamic and potentially dangerous conditions in the road network. By incorporating real-time hazard assessments, the method can cause a modification of vehicle behavior, thereby enhancing safety.

The hazard identification may comprise a spatial consolidation of a location and/or extent of a hazard identified by the hazard identification, comprising: determining, by the at least one processing system, whether hazards identified for multiple navigable segments are to be consolidated into a single contiguous hazard.

Thereby, a consolidation of hazards and hazard-based actions can be performed, which mitigates the risk of missing hazards.

The hazard identification may comprise a mapping of a result of the multi-source data fusion into a target spatial reference system.

Thereby, an outcome of the fusion process may be translated (or mapped) to a different spatial reference system.

The mapping into the target spatial reference system may be performed selectively based on whether performing or initiating the action comprises providing a hazard identification result to an application that requires the hazard identification results in relation to a predetermined spatial reference system.

Thereby, an outcome of the fusion process may be translated (or mapped) to a different spatial reference system for performing or initiating the action.

The mapping into the target spatial reference system may comprise mapping into a map-agnostic reference frame (such as at least one geolocation, which may be specified by longitude and latitude).

Thereby, an outcome of the fusion process may be translated (or mapped) to a map-agnostic reference frame for performing or initiating the action.

The method may be a method of identifying hazards that comprise slippery road conditions, wherein the several sources comprise a probe data source and at least one other source comprising a traffic message data source and/or a weather data source, wherein the at least one processing system is operative to perform the multi-source data fusion comprising a fusion of the probe data obtained from the probe data source and at least one of weather data obtained from the weather data source and/or traffic message data obtained from the traffic message source, and wherein the action comprises an action responsive to the slippery road conditions.

Thereby, risks associated with slippery roads can be detected more reliably and can be addressed.

The action responsive to the slippery road conditions may comprise an adjustment of a vehicular braking system decision logic (such as an electronic braking system logic) and/or of an L3 or L4 autonomous driving system based on the slippery road conditions.

Thereby, risks associated with slippery roads can be addressed.

The probe data may comprise vehicle sensor data captured using sensors installed in vehicles, such as sensors operative to detect precipitation and/or measure data indicative of a frictional coefficient between vehicle and road surface.

Thereby, risks associated with slippery roads can be addressed using measurements obtained by vehicle sensors.

The hazard identification may comprise a hazard classification, wherein the action is based on the hazard classification.

Thereby, an assessment of whether a hazardous condition of a specified nature is present can be made and/or a hazard type can be determined.

Alternatively or additionally, the hazard identification may comprise a determination of a hazard severity, wherein the action is based on the hazard severity.

Thereby, a severity of a situation can be determined on a predefined continuous or categorical scale.

Alternatively or additionally, the hazard identification may comprise a determination of confidence, wherein the action is based on the confidence.

Thereby, a confidence level associated with the detection of the hazardous situation (or the cancellation of a previous hazard) is determined. Such a confidence level can also be interpreted as the probability that the hazard is indeed present (or truly alleviated). The determination of the confidence and use of the confidence for performing or initiating the action mitigates the risk of inappropriate actions being taken (e.g., in case of a low confidence in the hazard prediction).

Alternatively or additionally, the hazard identification may comprise a determination of an impact of the hazard.

Thereby, a measure of an actual impact of the detected condition on driver behavior, expressed on a predefined scale (e.g., the percentage of drivers exhibiting measurable speed changes) can be determined and used, e.g., to determine whether the hazard is to be lifted.

Alternatively or additionally, the hazard identification may comprise a determination of a recommendation.

Thereby, a recommended adjustment to driving behavior can be automatically established, such as a suggested speed that mitigates risk under current conditions.

The data may comprise or may be based on data that is based on any combination of two, three, or more of the following: sensor derived observations (SDOs) captured using vehicle sensors installed in vehicles; active community input (ACI) report data that may be submitted via probes; SDOs captured using non-vehicular measurement instrumentation; SDOs captured using measurement instrumentation that is installed in geospatially fixed locations; SDOs captured using airborne measurement instrumentation (such as satellite-based or aircraft-based measurements).

Thereby, the precision and spatiotemporal accuracy of the hazard identification is enhanced.

According to another aspect, there is disclosed machine-readable instruction code which, upon execution by at least one processing circuit, causes the at least one processing circuit to perform the method of any one aspect or embodiment.

Thereby, the machine-readable instruction code provides the effects and advantages discussed in association with the method according to any aspect or embodiment.

According to another aspect, there is disclosed a data carrier comprising machine-readable instruction code which, upon execution by at least one processing circuit, causes the at least one processing circuit to perform the method of any one aspect or embodiment.

Thereby, the data carrier provides the effects and advantages of discussed in association with the method according to any aspect or embodiment.

The data carrier may comprise a non-transitory storage medium having stored thereon the machine-readable instruction code.

Thereby, the data carrier provides the effects and advantages of discussed in association with the method according to any aspect or embodiment.

According to a further aspect, there is provided a processing system for identifying hazards in a navigable network. The processing system comprises at least one interface operative to obtain data from several sources. The processing system comprises at least one processing circuit operative to perform a hazard identification comprising a multi-source data fusion of the data obtained from the several sources. The processing system is operative such that the multi-source data fusion comprises a spatiotemporal correlation of the data, the spatiotemporal correlation being performed for different ones of the several sources with the at least one processing system being operative to: perform, for at least some of the several sources, a spatial transform to a common spatial reference for spatially correlating the data; and apply, for temporally correlating the data, a time-based filter to identify which of the data obtained from the several sources is to be processed in combination in the hazard identification. The processing system is operative to perform or enable an action based at least on the hazard identification.

Various effects and advantages are associated with the processing system. The processing system is operative to perform a multi-source data fusion, providing the effect that the hazard identification can be performed taking advantage of the combined information from the several sources. This allows hazards to be identified with enhanced precision and/or spatiotemporal accuracy of the hazard identification. With the multi-source data fusion comprising the spatiotemporal correlation, the hazard identification can accommodate several sources having different spatial and/or temporal references. The spatial correlation to a common reference frame facilitates multi-source data fusion by providing a unified coordinate system in which data from diverse sources can be aligned and integrated. This allows for the transformation of the data from different spatial reference frames into a common representation. Temporal correlation enables multi-source data fusion by establishing a common time reference that synchronizes data from various sources that may operate on different timing schemes. This synchronization ensures that events captured by different sensors or systems can be compared and analyzed in relation to one another. As a result, the processing system is operative such that the spatiotemporal correlation enhances the overall quality and reliability of the hazard identification, leading to a more precise and/or spatiotemporally accurate identification of hazards. This improves the action(s) that are initiated or performed based at least on the hazard identification.

Optional features of the processing system and the effects attained thereby may correspond to the features and effects described in association with the method. Processing operations discussed in association with optional features of the method may respectively be performed by the at least one processing circuit.

The processing system may be operative to perform the method according to any aspect or embodiment disclosed herein. Processing operations discussed in association with optional features of the method may respectively be performed by the at least one processing circuit.

According to a further aspect, there is provided a system comprising several sources operative to provide data; a communication system; and the processing system of any aspect or embodiment, wherein the processing system is communicatively interfaced with the several sources over the communication system and operative to process the data to perform the hazard identification. Thereby, a more precise and/or spatiotemporally accurate identification of hazards is attained. The several sources may comprise several sources having different source types.

Thereby, robustness and reliability of the hazard identification and, consequently, of warnings and/or automated vehicle control operations are improved. The multi-source data fusion allows the at least one processing system to cross-verify data, overcoming limitations or inaccuracies inherent to a hazard identification that is based on a single source type only. The precision (e.g., by reducing the risk of false positives and/or false negatives in the hazard identification) and/or spatiotemporal accuracy of the hazard identification is improved thereby.

The several sources having different source types may comprise; one or several sources that are not based on probe data aggregated from probes on the navigable network; and/or one or several sources that use measurement instrumentation that is distinct from vehicle-based sensor instrumentation (such as measurement instrumentation that is based on sensors fixedly installed with respect to the navigable network and/or measurement instrumentation onboard of satellites and/or aircrafts).

Thereby, robustness and reliability of the hazard identification and, consequently, of warnings and/or automated vehicle control operations are improved. The multi-source data fusion allows the at least one processing system to cross-verify data, overcoming limitations or inaccuracies inherent to a hazard identification that is based on a single source type only. The precision (e.g., by reducing the risk of false positives and/or false negatives in the hazard identification) and/or spatiotemporal accuracy of the hazard identification is improved thereby.

The different source types may comprise sources operated by different operators and/or sources that provide data using different measurement instrumentation.

Thereby, robustness and reliability of the hazard identification and, consequently, of the at least one action (such as warnings and/or automated vehicle control operations) are improved. The precision (e.g., by reducing the risk of false positives and/or false negatives in the hazard identification) and/or spatiotemporal accuracy of the hazard identification is improved thereby.

The several sources may comprise at least one probe data source and at least one additional data source different from the at least one probe data source. The multi-source data fusion may combine probe data from the at least one probe data source and additional data from the at least one additional data source.

Thereby, robustness and reliability of the hazard identification and, consequently, of the at least one action (such as warnings and/or automated vehicle control operations) are improved. The precision (e.g., by reducing the risk of false positives and/or false negatives in the hazard identification) and/or spatiotemporal accuracy of the hazard identification is improved thereby.

According to a further aspect, there is disclosed a vehicle or probe comprising an interface (such as a wireless interface) operative to receive hazard identification data that is based on the hazard identification performed by the method or processing system according to an aspect or embodiment. The vehicle or probe further comprises at least one control circuit operative to perform at least one control operation based on the hazard identification data. The control operation may comprise an actuator control operation.

Thereby, the effects and advantages attained by the method or processing system according to embodiments are used to implement control operations in the vehicle or probe.

The control operation may comprise one or both of: adjustments to an ADAS; adjustments to autonomous driving settings.

Thereby, the hazard identification can be used to determine adjustments to vehicle and/or probe processing operation, e.g., to driver assistance (such as an ADAS) and/or operation of an Level 3 (L3) or Level 4 (L4) autonomous vehicle. By using the hazard assessments, a modification of vehicle behavior is attained that enhances safety.

While the techniques disclosed herein may be used for hazard identification in association with navigation, route search, driver assistance, ADAS, and autonomous driving functions, the techniques are not limited thereto.

### BRIEF DESCRIPTION OF THE DRAWINGS

Embodiments will be described with reference to the drawings in which similar or corresponding reference signs designate elements having similar or corresponding configuration and/or function.
Fig. 1 is a schematic representation of a system comprising a processing system operative to perform a hazard identification.
Fig. 2 is a schematic representation of at least one processing circuit of the processing system.
Fig. 3 is a schematic representation of at least one processing circuit of the processing system.
Fig. 4 is a schematic representation of a portion of a navigable network and a tile set defining a hierarchical tile structure, to explain aspects of spatial transformations of the hazard identification.
Fig. 5 is a schematic representation of data processed in the hazard identification.
Fig. 6 is a schematic representation of map data that may be accessed by the processing system.
Fig. 7 is a schematic representation of data processed in the hazard identification, to explain aspects of temporal correlations of the hazard identification.
Fig. 8 is a flow chart of a method of performing a hazard identification.
Fig. 9 is a flow chart of a method of performing a hazard identification.
Fig. 10 is a flow chart of a method of performing a hazard identification.
Fig. 11 is a schematic representation of probe speeds.
Fig. 12 is a schematic representation of at least one processing circuit of the processing system.
Fig. 13 is a schematic representation of an Al model that may be implemented by the at least one processing circuit of the processing system.
Fig. 14 is a schematic representation of probe speed dynamics.
Fig. 15 is a flow chart of a method of performing a hazard identification.
Fig. 16 is a flow chart of a method of performing a hazard identification.
Fig. 17 is a flow chart of a method of performing a hazard identification.
Fig. 18 is a flow chart of a method of performing a hazard identification.
Fig. 19 is a flow chart of a method of performing a hazard identification.
Fig. 20 is a schematic representation of a system comprising the processing system for performing a hazard identification and at least one vehicle.
Fig. 21 is a schematic representation of a system comprising the processing system for performing a hazard identification and at least one probe.

### DETAILED DESCRIPTION OF EMBODIMENTS

Embodiments will be described in detail. While some embodiments will be described in association with specific exemplary lane arrangements, the embodiments are not limited thereto.

The features of embodiments may be combined with each other unless specifically stated otherwise.

The techniques disclosed herein in detail are operative to perform a hazard identification that comprises multi-source data fusion. Combining the data from several sources provides enhanced precision and accuracy in the hazard identification. The techniques disclosed herein are operative to perform a spatiotemporal correlation comprising a spatial correlation and a temporal correlation of data from different ones of the sources, to thereby identify which of the data relate to a same spatial unit and a same temporal unit. This provides enhanced versatility, with the method and processing system being operative to process the data from the several sources without requiring the several sources to operate using a common spatial and temporal referencing system.

For illustration and without limitation, hazard identification is performed comprising integrating data from several sources. The data from the several sources may each have distinct origins, specifications, and characteristics. The techniques disclosed herein fuse the data from the several sources to obtain a more accurate assessment of hazardous conditions. For example, in order to facilitate detection of local slippery road conditions, the methods and processing system may be operative to combine two or more of:
- Road weather condition measurements within a specific area.
- Driver behavior information (e.g., speed) extracted from live GPS data along a particular stretch of road.
- Live SDO data regarding traction-loss events from vehicles clustered around a specific location.
- Additional potential data sources that may include traffic volume measurements derived from floating car data (FCD) probe data, ACI reports from drivers, journalistic content such as warnings from authorities or law enforcement, and live imagery from roadside cameras.

The techniques according to embodiments provide various effects and benefits, such as:
- Enhanced precision of hazard alerts, resulting in fewer false-positive alarms.
- Improved recall of hazards, enabling more reliable detection of dangerous situations.
- An indication of the confidence level associated with each hazard alert, allowing client systems to adjust a frequency and nature of alerts communicated to end users or targeted automated systems.
- Enhanced spatiotemporal resolution and accuracy of alerts, enabling more precise localization of hazardous situations and facilitating quicker detection and clearance of such conditions.

As used herein, a "multi-source data fusion" refers to a processing that integrates and combines information from the several sources. The multi-source data fusion may comprise any one, or any combination of, heuristic models, statistical models, Al or ML models.

As used herein, "several sources" refers to several sources that comprise at least two sources from which different types of data are obtained. The several sources may comprise sources of SDOs derived from different types of sensors (such as sensors installed at fixed locations relative to a navigable network and sensors onboard of vehicles). The several sources may comprise a probe data source in combination with at least one other source, without being limited thereto.

As used herein, a "probe" encompasses a navigation device without being limited thereto. Probe data may indicate probe traces also for devices that do not perform navigation-related functions. A probe may be an in-dashboard navigation device, a portable navigation device (PND), a mobile terminal (MT) of a cellular communication network (e.g., a smartphone) that may (but does not need to) perform a navigation-related operation, without being limited thereto. As used herein, a "probe" may in particular be a probe that is fixedly or removably provided in a vehicle, so as to move jointly with the vehicle. Thus, a "probe position" is also indicative of a vehicle position, and/or a "probe speed" is also indicative of a vehicle speed. These terms may be interchanged, unless explicitly stated otherwise.

As used herein, a "navigation device" encompasses an in-dashboard navigation device, a portable navigation device (PND), a mobile terminal (MT) of a cellular communication network that performs a navigation-related function, such as a smartphone, without being limited thereto.

As used herein, a "segment" of a navigable network encompasses a road segment, without being limited thereto. The segment may be defined in electronic map data by at least two nodes, which in turn may be defined in the electronic map data by their geospatial coordinates (such as latitude and longitude, without being limited thereto). In case of an electronic map that includes road definitions that can include more than two nodes, the techniques disclosed herein are applicable to any segment of such a road between two adjacent nodes of the road definition.

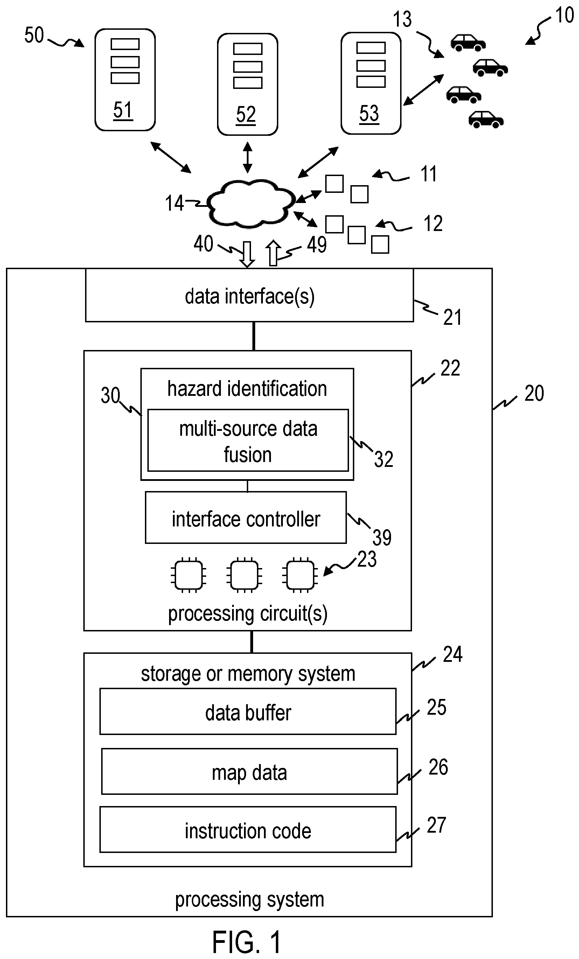

Fig. 1 is a schematic representation of a system 10 comprising a processing system 20 operative to perform a method of identifying hazards according to an embodiment. The system 10 comprises several sources 50. The processing system 20 is operative to perform a multi-source data fusion of data 40 from the several sources 50 to perform a hazard identification.

The processing system 20 comprises at least one interface 21 operative to receive the data 40 from the several sources 50. The processing system 20 comprises at least one processing circuit 22 operative to process the data 40. The at least one processing circuit 22 may comprise any one or any combination of integrated circuits 23, integrated semiconductor circuits, processors, controllers, application specific integrated circuits (ASICs), field programmable gate arrays (FPGAs), circuit(s) including quantum bits (qubits) and/or quantum gates, without being limited thereto.

The processing system 20 comprises a storage or memory system 24 or is operative to communicatively interface with a storage or memory system 24. The storage or memory system 24 may have stored therein instruction code 27, which, upon execution by the at least one integrated circuit 23, causes execution of the method of identifying a hazard. The storage or memory system 24 may also store map data 26. The map data 26 may comprise versioned map data that may be stored in relation to a set of tiles that subdivide a region into substantially rectangular tiles. The storage or memory system 24 may comprise a data buffer 25 to store part of the data 40 receives from the several sources 50.

The at least one processing circuit 22 is operative to perform a hazard identification 30 based on the data 40 received from the several sources 50. The at least one processing circuit 22 is operative such that the hazard identification 30 comprises a multi-source data fusion 32 of the data 40 obtained from the several sources 50. The at least one processing circuit 22 is operative such that the multi-source data fusion 32 comprises a spatiotemporal correlation of the data 40 from different ones of the several sources 50. The at least one processing circuit 22 may be operative to perform, for at least some of the several sources 50, a spatial transform to a common spatial reference for spatially correlating the data. The at least one processing circuit 22 may be operative to apply, for temporally correlating the data, a time-based filter to identify which of the data 40 obtained from the several sources 50 is to be processed in combination (e.g., by using a heuristic model, a statistical model, and/or an Al model) in the hazard identification.

The at least one processing circuit 22 comprises an interface controller 39 operative to control the at least one interface 21 to provide output 49 to perform or enable an action based at least on a result of the hazard identification. The action may comprise a human machine interface (HMI) control action, e.g., causing issuance of a hazard warning, and/or a control action that adjusts operation of a vehicle component (e.g., of a driver assistance, ADAS, or L1-L4 autonomous driving logic).

The several sources 50 comprise at least two sources operative to provide data based on different SDOs and/or other types of data pertinent to hazard identification. The several sources 50 may comprise sources using different types of measurement instrumentation 11, 12, such as sensors that are installed at fixed locations with reference to the navigable network and/or sensors that are displaceable relative to the navigable network. The several sources 50 may comprise at least one source 51 operative to provide road weather condition measurements within a specific area. Alternatively or additionally, the several sources 50 may comprise at least one source 53 operative to driver behavior information (e.g., speed) extracted from live global navigation satellite system (GNSS) (e.g., GPS) data. Alternatively or additionally, the several sources 50 may comprise at least one source 53 operative to provide SDO data regarding traction-loss events from vehicles 13. Alternatively or additionally, the several sources 50 may comprise at least one source 52 operative to provide data 40 indicative of traffic volume measurements derived from FCD probe data, ACI reports from drivers, journalistic content such as warnings from authorities or law enforcement that may be accessible via a wide area network (WAN) or the internet, and/or live imagery from roadside cameras.

The system 10 comprises a communication system 14. The communication system 14 may comprise a WAN, a cellular communication system, or another communication system. The processing system 20 is operative to communicatively interface with the several sources 50 to obtain the data 40, via the communication system 14.

The processing system 20 may be operative to obtain the data 40 by means of a push mechanism or by means of a pull mechanism. Preferably, the processing system 20 is operative to obtain the data from at least one of the several sources 50 by means of a push mechanism, without requiring the processing system 20 to request the respective data from the respective source.

The processing system 20 may be operative to obtain and process the data 40 when the data 40 comprises different types of data items, such as: messages (e.g., ACI report data) from one of the sources; at least one data stream (i.e., a stream of data packets, with the processing system 20 being operative to start processing of the data stream prior to all data packets to be received) from at least one of the sources; or other packetized data transmissions.

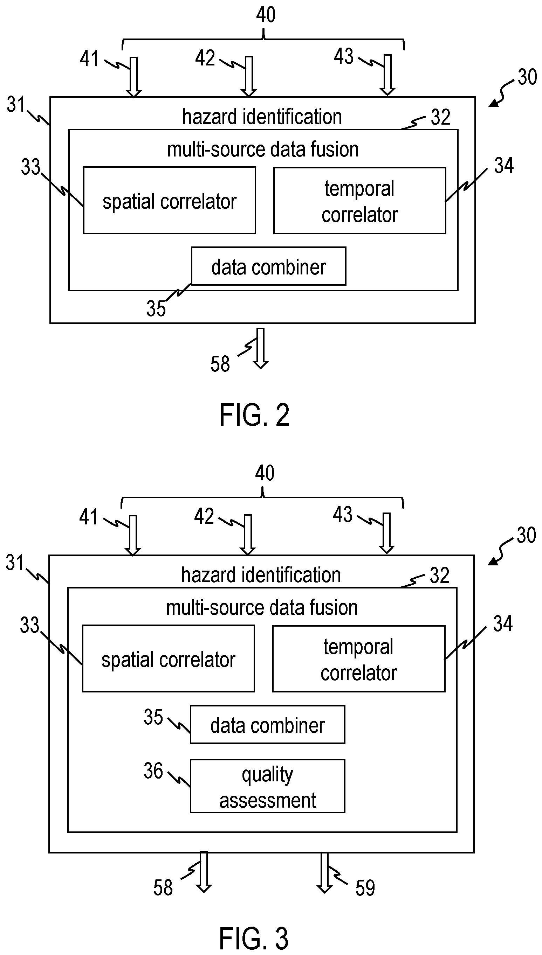

Fig. 2 and Fig. 3 are schematic representations of components of the at least one processing circuit 22 and, more particularly, of the hazard identification 30. The hazard identification 30 receives data 40 from the several sources 50 as input. The data 40 may comprise data 41 from one of the several sources 50, data 42 from another one of the sources 50, and data 43 from a further one of the several sources 50. The data 41, 42, 43 may comprise asynchronous data packets. I.e., the hazard identification 30 is operative to process data comprising asynchronous data packets from different ones of the several sources 50, to perform the hazard identification. The data 41, 42, 43 may comprise data using different spatial and/or temporal referencing systems. Thus, the hazard identification 30 remains operative even when the data 41, 42, 43 as received by the processing system 20 are not provided in relation to a same spatial and/or temporal reference.

The multi-source data fusion 32 comprises a spatiotemporal correlation. To perform the spatiotemporal correlation, a spatial correlator 33 of the multi-source data fusion may be operative to implement a transformation to map location information in data from different ones of the several sources 50 to a common spatial reference system. The common spatial reference system may be the spatial reference system to which location information of data from at least one of the several sources 50 is referenced, or may be different from all of the spatial reference systems to which location information of data from any of the several sources 50 is referenced. The spatial correlator 33 may be operative to determine which of the data 41, 42, 43 from different ones of the several sources 50 pertain to a same navigable segment of the navigable network, to a same area, and/or to a same geolocation. The spatial correlator 33 may perform operations such as: establishing, based on an access of the map data 26, tiles in which navigable segments are located or with which navigable segments overlap; establishing, based on an access of the map data 26, geo-coordinates of nodes of navigable segments and/or of locations along the navigable segments; determining, based on an identifier for a navigable segment and/or for a tile, tiles, (hexagonal) cells, or other cells overlapping with a certain area; determining, based on an area specified by weather data and/or warning data of a warning service, tiles, (hexagonal) cells, and/or navigable segments that overlap with the area; without being limited thereto. The spatial correlator 33 may be operative to perform the spatial transformation between at least the following: a graph representation of the navigable network, where the navigable network comprises navigable segments (such as road segments); a subdivision of the Earth's surface into rectangular tiles based on longitude and latitude; a subdivision of the earth's surface by a hexagonal grid system, such as a fixed level of the H3 geospatial indexing system.

The multi-source data fusion 32 may comprise a temporal correlator 34. The temporal correlator 34 may be operative to determine which of the data 41, 42, 43 from different ones of the several sources 50 pertain to a same time period. The temporal correlator 34 may apply a temporal filter to select, based on time information included in the data 41, 42, 43, those data elements that pertain to a same time window that is to be considered for the hazard identification. The temporal filter may have a filter kernel (such as a time window having a step-wise change at either end). The temporal correlator 34 may be operative to adjust the filter kernel (e.g., by adjusting the time window length) based on: (i) a type of hazard to be identified (e.g., depending on whether the hazard is a slippery road condition, a shear wind condition, a broken car condition); and/or (ii) based on whether a hazard classification, a hazard severity, or a confidence of the hazard identification is to be determined.

There may be cases in which receipt of data precedes the time period to which a condition (such as weather and/or warning) pertains, as may be the case with messages from forecast services. To ensure that all pertinent information is available for the multi-source data fusion, the at least one processing circuit 22 may be operative to store the received data 41, 42, 43 in the data buffer 25 of the storage or memory system 24. The at least one processing circuit 22 may be operative to retrieve the data 41, 42, 43 from the storage or memory system 24. The at least one processing circuit 22 may be operative to delete data from the data buffer 25 based on whether it pre-dates the filter kernel of the temporal filter as determined from the time at which the hazard identification is performed.

The multi-source data fusion 32 comprises a data combiner 35 that combines the data 40, with the spatiotemporal correlation applied thereto. The data combiner 35 may be operative to use any one or any combination of heuristic models, statistical models, Al models, and/or ML models to perform the fusion. Implementations of such processing techniques that may be used in embodiments are discussed below for further illustration, but without limitation:
Heuristic Models: These models are informed by domain expertise and validated through evaluation. For instance, based on a heuristics model, the hazard identification 30 may be operative to make a decision to terminate any alert for a broken-down vehicle after two ACI user reports actively reject the issued alert within a ten-minute window.
Statistical Models: Derived from historical data, these models can inform predictions. For example, the hazard identification 30 may be operative such that an analysis of past slippery road hazards can reveal that a certain percentage of issued alerts were accurate, influenced by factors such as observed speed drops, seasonality, geographical location, and road classification. The confidence in a hazard prediction for a given spatial reference unit (e.g., a navigable segment and/or a tile and/or a hexagonal cell) can be established accordingly. In another exemplary statistical evaluation, the hazard identification 30 may be operative to assess the average speed adjustments observed among drivers under specific slippery conditions, considering factors such as road curvature, slope, and ambient conditions. The suggested speed could be derived from this model and further refined based on the currently measured local speeds.
Al or ML models: The hazard identification 30 may be operative to apply data-driven techniques, such as Al or ML models that are trained on historical, pre-labelled data. For instance, the hazard identification 30 may be operative to apply a decision tree or neural network trained using historical, verified hazards, incorporating features such as ambient conditions, fixed road segment characteristics (slope, curvature, etc.), average observed speed, and the number of ACI reports within a thirty-minute timeframe. Predictions for any given spatial reference unit and its data from the last thirty minutes could then be generated using this established model.

The hazard identification 30 may be operative to select from among several available processing techniques. The hazard identification 30 may be operative such that a selection of a processing technique is based at least on the specific information to be generated (classification, severity, confidence, etc.), the intended hazard type, and the available or anticipated input data 40.

The hazard identification 30 may be operative to combine several of the processing techniques to derive insights into various aspects of a detected hazardous situation based on a shared total set of input data. For instance, by leveraging speed information, ACI user reports, and SDO content associated with a specific road segment over a time window (e.g., thirty minutes) preceding the hazard identification, processing techniques of varying types - such as heuristic and statistical approaches - can be employed to determine the severity, confidence, and recommended speed adaptations for the identified hazard, respectively. Each methodology may utilize all or only a subset of the available input sources 51, 52, 53, and these processing techniques may differ from the approach used to initially detect the presence or absence of the hazard.

Alternatively, the hazard identification 30 may be operative to employ processing techniques that inherently combine the prediction of multiple aspects. For example, ML models can be used that were trained to automatically provide a confidence level 59 in association with their predictions 58 regarding the presence or absence of a hazard (Fig. 3).

The processing system 20 may be operative to provide a quantitative quality measure 59 for a hazard identification result (e.g., hazard classification, hazard severity). The multi-source data fusion 30 may comprise a quality assessment 36 operative to determine and output the quantitative quality measure 59. The quantitative quality measure 59 may be determined, by the multi-source data fusion 30, based on the data 40 from the several sources 50. The quantitative quality measure 59 may comprise a confidence and/or uncertainty. As previously noted, the quantitative quality measure 59 (such as a confidence) may be generated in combination with the hazard identification result 58 (e.g., the hazard classification and/or hazard severity) using a ML model that has been trained to output both the hazard identification result 58 and the quantitative quality measure 59. Alternatively or additionally, the processing system 20 may be operative to provide the quantitative quality measure 59 based at least on probe speed dynamics (e.g., changes in a distribution of probe speeds in a navigable segment and/or at a geolocation that is identified to have a hazard). Changes in the distribution of probe speeds can be evaluated quantitatively to determine a confidence in an identified hazard and/or to determine an uncertainty of a hazard identification.

When a quantitative quality measure 59 for the hazard identification is determined, the processing system 20 may be operative to determine the action to be performed, and/or to perform or initiate the action to be performed, based not only on the hazard classification and/or hazard severity determined by the multi-source data fusion 30, but also based on the quantitative quality measure 59.

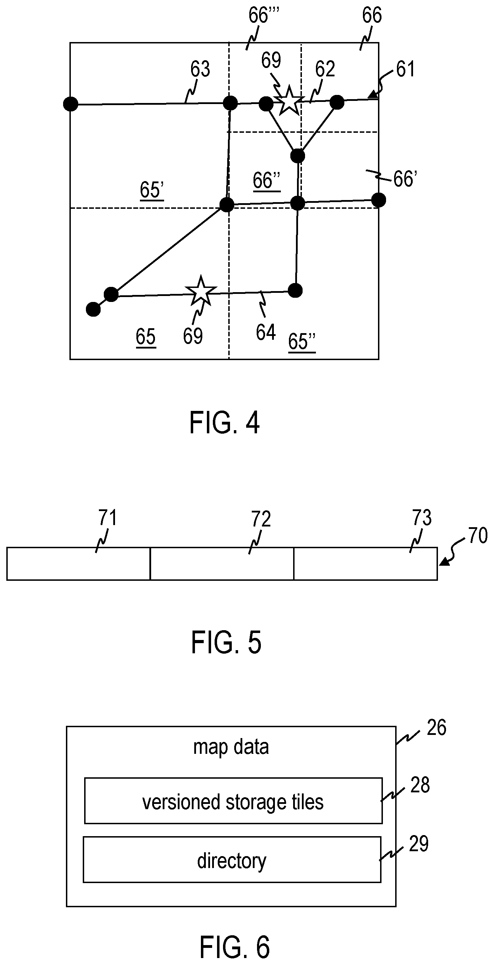

Fig. 4 is a schematic representation to illustrate the spatial transformation performed by the method and/or processing system 20 for identifying hazards. Map data may define a navigable network 61 comprising a plurality of navigable segments 62, 63, 64. Data (such as data 41) from at least one of the several sources 50 may be referenced to navigable segments of the navigable network 61. A tile set may comprise several tiles 65, 65', 65", 66, 66', 66", 66‴. The tiles of the tile set may, in union, cover part or all of the navigable network 61. The tile set may be used not only as a conceptual subdivision of an area, but may also define a structure for storage of map data. The tiles of the tile sets may comprise tiles having different sizes. The tile set may define a hierarchical tiling, with a tile size being spatially varying depending on, e.g., a density of and/or spatially varying storage requirements for map objects. Data (such as data 42) from at least another one of the several sources 50 may be referenced to tiles of the tile set, e.g., by including a reference to a geolocation or area. The processing system 20 may be operative to spatially correlate the data, comprising a transformation between location information from one reference system (such as network-referential data references to at least one of the navigable segments 62, 63, 64) and tile-referential data referenced to the tiles of the tile set (such as weather forecast data and/or warnings that are applicable to certain geographic areas). The processing system 20 may alternatively or additionally be operative to establish spatial references between other types of location information, such as hexagonal cells, Voronoi cells, or other referencing systems applicable in the context of road network-related data. The processing system 20 may be operative to perform a map data query to determine, for a network-referential data item, tiles overlapping the navigable segment to which the data item pertains and/or geo-coordinates of the navigable segment. Thereby, data pertaining to a same navigable segment and/or area (e.g., tile) may be identified and combined even when they stem from sources using different spatial reference systems. Thereby, the method and processing system may identify hazards 69 in relation to navigable segments and/or in relation to geo-coordinates (e.g., in a map-agnostic manner).

Fig. 5 shows a schematic representation of a data item 70 (e.g., a message or data packet) received from the several sources. The data item 70 may comprise location information 71, optional time information 72, and payload data 73 useful in the hazard identification. The time information 72 need not be explicitly included, e.g., in cases in which at least one of the sources 51, 52, 53 provides a stream of data packets and a time of receipt of a data packet can be used to establish the time to which it pertains (e.g., because transmission delays are small as compared to the time scales relevant for the hazard to be identified). The payload data 73 may comprise an ACI report, SDO data, and/or other data useful in the hazard identification. A spatial reference system of the location information 71 may be dependent on the source from which the data item 70 originates. The method and processing system 20 is operative to perform a spatial transformation to account for such potential changes in spatial reference system between different ones of the several systems. Similarly, the time information 72, if present at all, may have different formats, and/or the time information 72 may pertain to a time prior to or later than a time of receipt of the data item 70 (e.g., in case of forecasts or predictive warnings). The method and processing system 20 is operative to perform a temporal filtering, based on the time to which a data item 70 pertains, to determine whether it is to be combined with other data received from the several sources 50 in the hazard identification.

Fig. 6 is a schematic representation of the map data 26 that may be accessible for performance of the hazard identification 30. The map data 26 may store information on navigable segments (as well as other data such as point of interest (POI) data) in association with the tiles of a tile set that covers an area in which the navigable network is arranged. The map data may be stored in versioned storage tiles 28, thereby maintaining a history of changes to the map data. Access to the versioned storage tiles may be implemented by means of a directory 29. To perform the spatial transformation, the processing system 20 may be operative to access, using the directory 29, at least one of the storage tiles 28 to determine to which geolocation and/or tile(s) network-referential data pertains, and/or to determine which navigable segments are located within one or several tile(s) to which tile-referential data pertains.

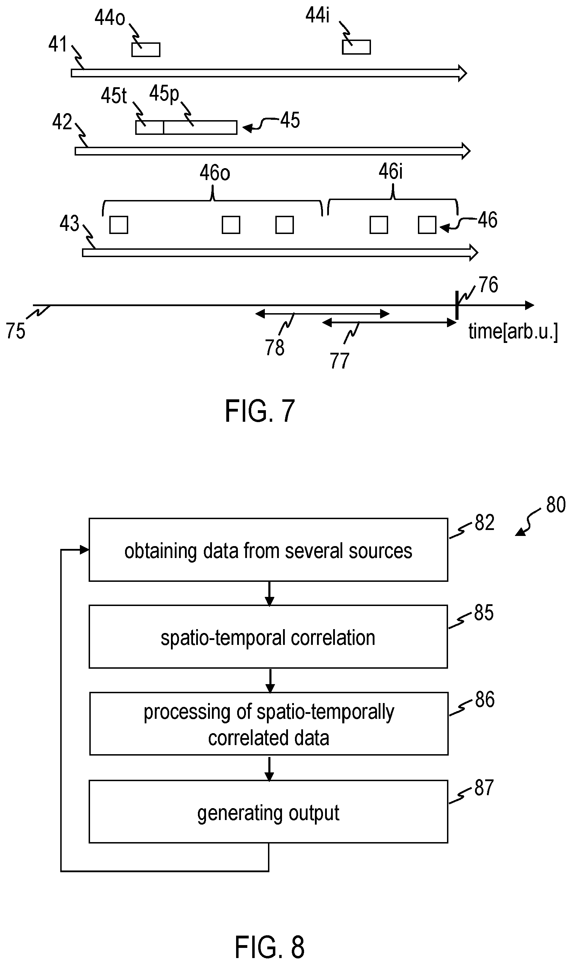

Fig. 7 is a schematic representation illustrating temporal filtering performed to establish spatiotemporal correlations of data from the several sources 50 when a hazard identification is performed at a processing time 76. A temporal filtering uses a filter kernel that may correspond to a sliding time window 77. The filter kernel may be dependent on the type of hazard, on whether hazard classification or hazard severity is to be determined, and/or the types of data available as inputs for the hazard identification.

The data comprises data 41 from one of the several sources 50, which may comprise several messages 44o, 44i. The temporal filtering may comprise excluding data of messages 44o received outside of, or otherwise unrelated to, the sliding time window 77 from processing by, e.g., a heuristic, statistical, or Al model. Data from messages 44i received within, or otherwise pertinent to, the sliding time window 77 may be combined with data 42, 43 from other sources in the hazard identification.

The data comprises data 42 from another one of the several sources 50, which may comprise a message 45 that includes time data 45t specifying a validity period 78 and payload data 45p specifying a condition (such as a warning or weather condition) applicable in the validity period 78 specified by the time data 45t. Data included in a message 45 having a validity period 78 that overlaps with the filter kernel (e.g., the sliding time window 77) may be combined with data 41, 43 from other sources in the hazard identification. Data having a validity period 78 that is disjoint from the filter kernel (e.g., the sliding time window 77) may be discarded.

The data comprises data 43 from yet another one of the several sources 50, which may comprise a stream of data packets 46. The temporal filtering may comprise excluding data packets 46o received outside of, or otherwise unrelated to, the sliding time window 77 from processing by, e.g., a heuristic, statistical, or Al model. Data from data packets 46i received within, or otherwise pertinent to, the sliding time window 77 may be combined with data 41, 42 from other sources in the hazard identification.

Fig. 8 is a flow chart of a method 80 of identifying hazards. The method 80 may be performed automatically by or using the processing system 20, or by or using the system 10.

At process block 82, the processing system 20 obtains data from several sources 50. Obtaining the data from the several sources 50 may comprise obtaining the data by means of a push mechanism from some or all of the several sources 50. The several sources 50 comprise sources 51, 52 that use different (e.g., disjoint) measurement instrumentation 11, 12 to provide their respective data. The several sources 50 may comprise sources providing different types of information, such as probe-based data and data not obtained from probes.

At process block 85, the processing system 20 performs a spatiotemporal correlation of the data. The spatiotemporal correlation comprises determining which data items included in the data from different sources pertain to a same spatial unit (e.g., a same navigable segment and/or a same tile and/or a same cell) and a same temporal unit (e.g., a same time period 77). The spatiotemporal correlation may comprise a spatial transformation of location information and a time-based filtering using a temporal filter kernel.

At process block 86, the spatiotemporally correlated data are processed using, e.g., one, several, or all of: a heuristic model, a statistical model, an Al model, an ML model. Thereby, the data from different ones of the several sources that pertain to the same spatial and temporal units are combined in the processing. The processing may be dependent on the hazard to be identified, on whether hazard classification and/or hazard severity determination is to be performed, or whether a quantitative quality measure for the hazard identification is to be determined.

At process block 87, output is generated and provided to perform or initiate an action. The action may comprise an HMI control action (e.g., to output a hazard alert or warning) or a control action that affects vehicle operation (e.g., by modifying control logics of an assistance and/or L1-L4 autonomous driving system).

The method 80 may comprise iteratively repeating process blocks 82, 85, 86, 87. Repetitions may be triggered by expiry of a timer (e.g., periodically) and/or in an event-driven manner (e.g., responsive to receipt of new data pertaining to spatial unit that does not have an active hazard). The repetitions may be triggered using different criteria conditionally depending on whether or not there is an active hazard identified for a spatial unit. For a spatial unit for which there is no active hazard, a repetition may be triggered by receipt of data pertaining to the spatial unit. For a spatial unit for which there is an active hazard, the process blocks 82, 85, 86, 87 may be repeated continually (i.e., in an ongoing manner) to determine whether the hazard has ceased to exist.

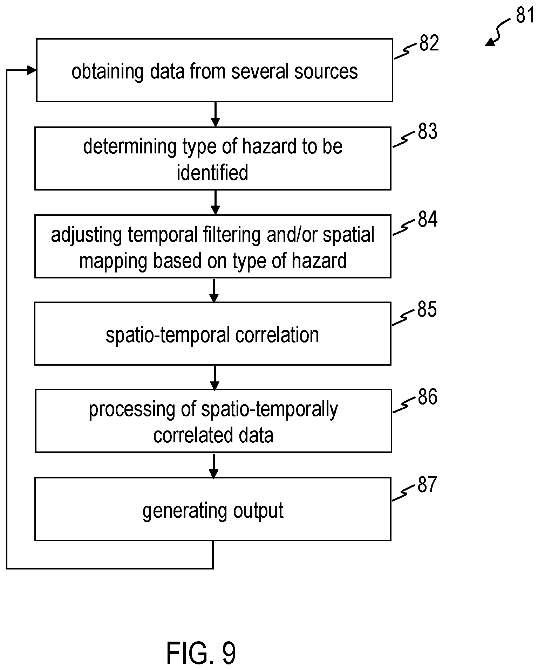

Fig. 9 is a flow chart of a method 81 of identifying hazards. The method 81 may be performed automatically by or using the processing system 20, or by or using the system 10.

At process block 82, which may be implemented as described with reference to Fig. 8, the processing system 20 obtains data from several sources 50.

At process block 83, the processing system 20 determines a type of hazard to be identified. Determining the type of hazard may comprise controlling an interface (e.g., an HMI) to enable input specifying the type of hazard to be identified based on the data. Determining the type of hazard may comprise selecting, by the processing system 20, a hazard type for investigation from a list of hazard types for which the processing system 20 can perform hazard classification and/or severity determination.

At process block 84, the processing system 20 may adjust the temporal filter based on the type of hazard. Adjusting the temporal filter may comprise adjusting a length and/or shape of the filter kernel based on the type of hazard. Optionally, the spatial transformation may also be adjusted based on the type of hazard. For illustration, for certain types of hazards (such as shear winds) spatial units having a first size and/or shape may be more appropriate, while for other types of hazards (such as broken vehicle conditions) spatial units having a second size smaller than the first size may be more suitable to perform the hazard identification.

Process blocks 85, 86, 87 and a repetition of the method 91 may be implemented as described previously with reference to Fig. 8.

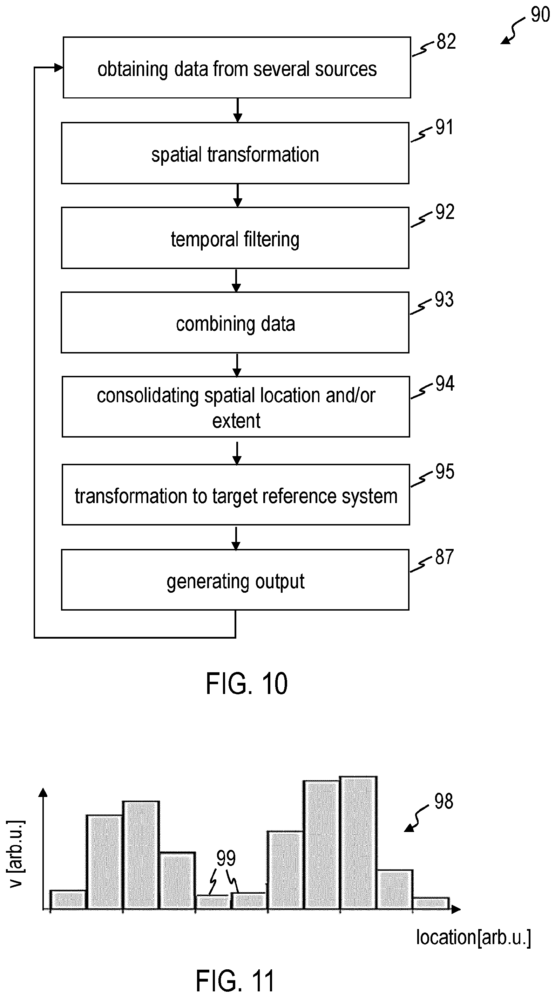

Fig. 10 is a flow chart of a method 90 of identifying hazards. The method 90 may be performed automatically by or using the processing system 20, or by or using the system 10.

At process block 82, which may be implemented as described with reference to Fig. 8, the processing system 20 obtains data from several sources 50.

At process block 91, the processing system 20 performs a spatial transformation of location information included in the data from at least one of the several sources 50 to determine which data items included in the data from different sources pertain to a same spatial unit (e.g., a same navigable segment and/or a same tile and/or a same cell). The processing system 20 may be operative to perform the spatial transformation between at least the following: a graph representation of the navigable network, where the navigable network comprises navigable segments (such as road segments); a subdivision of the Earth's surface into rectangular tiles based on longitude and latitude; a subdivision of the earth's surface by a hexagonal grid system, such as a fixed level of the H3 geospatial indexing system. The processing system 20 may be operative such that a target spatial reference system for the spatial transformation is dependent on the type of hazard to be identified and/or on whether hazard classification, hazard severity determination, and/or confidence in the result of the hazard identification is to be determined. This enhances the precision (e.g., by reducing the risk of false positives and/or false negatives in the hazard identification) and/or spatiotemporal accuracy of the hazard identification.

At process block 92, the processing system 20 performs a time-based filtering to determine which data items included in the data from different sources pertain to a same temporal unit (e.g., a time interval having a pre-defined length preceding the time at which the hazard identification processing is initiated). The processing system 20 may be operative to adjust a filter kernel of the time-based filtering (e.g., a time window length of a time window) based, e.g., on the sources that are available and/or the type of hazard to be identified. This enhances the precision (e.g., by reducing the risk of false positives and/or false negatives in the hazard identification) and/or spatiotemporal accuracy of the hazard identification.

At process block 93, the processing system 20 combines the data determined to pertain to a same spatial unit and a same temporal unit. A processing technique for combining the data may comprise heuristic processing techniques, statistical processing techniques, Al processing, and/or ML processing. The processing technique may be selected based, e.g., on the sources 50 that are available to obtain the data 40 therefrom and/or the type of hazard to be identified and/or based on whether hazard classification or hazard severity determination is to be performed.

At process block 94, the processing system 20 may consolidate a spatial location and/or extent of hazards that were identified. The consolidation may comprise merging hazards identified to exist in immediately adjacent spatial units (e.g., navigable segments and/or areas) into one hazard that exists in a union of the spatial units. The consolidation may comprise merging hazards identified to exist in non-immediately adjacent spatial units (e.g., navigable segments and/or areas) into one hazard, provided that the various non-immediately adjacent spatial units comply with a distance threshold criterion (e.g., by being spaced by not more than a threshold distance, and/or by having not more than a threshold number of navigable segments between them). The consolidation further improves the precision and spatiotemporal accuracy by mitigating the risk of a hazard in some spatial units (e.g., navigable segments) being missed due to insufficient data.

At process block 95, the processing system 20 may transform the hazard identification result into a target spatial reference frame. The target spatial reference frame may be different from the one to which the location information was previously transformed in performance of the multi-source data fusion. The target spatial reference frame may be selected depending on services (such as warning systems, alert systems, and/or control systems) that receive and utilize the hazard identification. The target spatial reference frame may be a map-agnostic reference frame that is independent of the map data 26. This provides enhanced flexibility. For illustration, services (such as warning systems, alert systems, and/or control systems) can utilize the hazard identification results even if they do not have access to the map data.

At process block 87, which may be implemented as described with reference to Fig. 8, output is generated and provided to perform or initiate an action.

Repetitions of the various process blocks may be performed, using any of the techniques described herein, e.g., with reference to Fig. 8.

The processing system 20 and/or the methods of Fig. 8, Fig. 9, and/or Fig. 10 may be operative to perform the spatial transformation, with preferred optional features of the spatial transformation being described in more detail next.

Information from different one of the several sources 50 may be combined to detect hazards at specific locations. For a given application and hazardous phenomenon, the type of desired target location can be very different. Examples include defining an area of strong winds, detecting a stretch of slippery road or finding the exact geo-location of a broken-down vehicle. Likewise, the used input data can have very different spatial characteristics, e.g., the geo-coordinates where a user-report was issued, the area for which a temperature-measurement is representative or a segment of road for which reduced speeds have been detected.

For the fusion of data 40 from the several sources 50, the processing system 20 and/or the methods of Fig. 8, Fig. 9, and/or Fig. 10 may perform a spatial transformation in a manner that depends on a given use-case (e.g., an application and/or hazard-type) to a common referencing system. Examples include: a graph representation of the road network (commonly referred to as a map), where the network is divided into fixed road segments; a subdivision of the Earth's surface into rectangular tiles based on longitude and latitude; a subdivision of the earth's surface by a hexagonal grid system, such as a fixed level of the H3 geospatial indexing system.

The processing system 20 and/or the methods of Fig. 8, Fig. 9, and/or Fig. 10 may perform the spatial transformation such that the reference system to which data are being mapped ensures that all input from various sources, when matched to the same smallest unit of the reference system (e.g., the same road segment or the same tile), can be validly considered spatially correlated for the intended purpose.

The processing system 20 and/or the methods of Fig. 8, Fig. 9, and/or Fig. 10 may be operative such that incoming data 40 from the several sources 50 is initially mapped to the selected common referencing system. The methodology for achieving this mapping can be dependent on the spatial characteristics of the respective source data and/or the requirements of the target systems. Examples include, but are not limited to:
- An ACI report submitted by a driver is matched to the corresponding road segment on the map where the vehicle was located at the time (point-map-matching, reference system: map) or to the tile in which the vehicle was situated (simple point-in-box matching, reference system: tiles).
- When vehicle sensors detect a wet road surface over a continuous driving period, the relevant portion of the GPS trace is translated into a temporal sequence of traversed road segments on the map (classical map-matching, reference system: map).
- A network of point locations from (virtual or real) road weather stations reporting ambient conditions is converted into a subdivision of the Earth's surface using Voronoi cells. Within each Voronoi cell, the conditions measured by the corresponding weather station are deemed applicable. Incoming data from a specific weather station can then be mapped onto each map segment that falls within its Voronoi cell (reference system: map).

The processing system 20 and/or the methods of Fig. 8, Fig. 9, and/or Fig. 10 may be operative to perform the time-based filtering, with preferred optional features of the time-based filtering being described in more detail next.

For effective hazard detection, all input data mapped to the same unit of the spatial referencing system must not only be spatially correlated but also temporally correlated. By means of a temporal correlation, performed by means of temporal filtering, the processing system 20 and/or the methods of Fig. 8, Fig. 9, and/or Fig. 10 can determine whether two different inputs, received for the same location but at/for different times, can be regarded as indicative or counter-indicative of the same imminent hazard. To enable this, the processing system 20 responsible for temporal correlation must maintain a repository (memory) of all input data associated with a given spatial unit, collected within a defined time period 77, or time window 88, in the past. The duration of this time window for retaining historical local input data is influenced by several factors, including the nature of the hazard being detected, the frequency of incoming data, and the reliability of that information.

The processing system 20 and/or the methods of Fig. 8, Fig. 9, and/or Fig. 10 can be operative such that a choice of time window (or more generally, a filter kernel of the time-based filter) can be spatially invariant or can be varying for each spatial reference unit. Below are several illustrative examples:
- For detecting slippery conditions, road/air temperature and humidity readings from a weather station that publishes measurements every five minutes may be utilized. If these measurements are prone to noise, significant fluctuations may occur between readings. In such cases, it may be prudent to retain the last thirty minutes of data for sliding window averaging. Conversely, if the readings are known to be stable, it may suffice to consider only the most recent measurement.
- For various hazard types, speed measurements on a road segment derived from GNSS (e.g., GPS) probe data represent another indicative input source. If the road segment experiences merely low traffic volumes, it may be necessary to retain all records from the past hour to derive stable speed averages. In contrast, for a freeway segment with substantial traffic, aggregation over the past ten minutes may be sufficient. In general, the optimal time window will also depend on the typical time scales of the type of hazard considered.
- In instances where ACI user reports have indicated a broken-down vehicle on a freeway and the hazard has been publicly acknowledged, it is reasonable to expect a decrease in active user reports regarding the hazard in response. Consequently, the information from the original user reports should be retained for an extended period to prevent premature cancellation of the hazard due to the absence of new indications. Conversely, once multiple user reports have actively cancelled the event, the system should clear the memory of the previous reports.

The processing system 20 and/or the methods of Fig. 8, Fig. 9, and/or Fig. 10 can be operative to repeat the various processing operations for a re-evaluation of the hazard situation. A schedule for (re)evaluation can be implemented in various ways, depending on the available input data and the nature of the hazardous phenomenon. Examples include, but are not limited to:
- Regular Re-evaluation: The status of all spatial reference units (e.g., road segments, area tiles) is re-evaluated at predetermined intervals. This schedule can be uniform or tailored to different frequencies based on hazard types; for instance, slippery road conditions may be assessed every fifteen minutes, while longer-lasting obstacles like potholes might be evaluated once daily. The chosen interval may or may not be synchronized with the duration of the memorized time window(s) (see previous section).
- Event-Driven Re-evaluation: The status of a spatial reference unit is re-evaluated only when new data becomes available. This could occur with the arrival of a new temperature reading from a nearby weather station or the issuance of a new ACI user report.
- Conditional Re-evaluation: The frequency of re-evaluation may depend on whether a hazardous situation is already detected at a specific location. Locations with active detected hazards are re-evaluated regularly, while others are assessed only upon the arrival of new input data.

The processing system 20 and/or the methods of Fig. 8, Fig. 9, and/or Fig. 10 can be operative such that an outcome of the (re-)evaluation process will yield multiple insights regarding the prevailing local conditions. These insights may include, but are not limited to:
- Classification: An assessment of whether a hazardous condition of the specified nature is present, and which type.
- Severity: The general severity of the situation on a predefined continuous or categorical scale.
- Confidence: The confidence level associated with the detection of the hazardous situation (or the cancellation of a previous hazard), which can also be interpreted as the probability that the hazard is indeed present (or truly alleviated).
- Impact: A measure of the actual impact of the detected condition on driver behavior, expressed on a predefined scale (e.g., the percentage of drivers exhibiting measurable speed changes).
- Recommendation: A recommended adjustment to driving behavior, such as a suggested speed that mitigates risk under current conditions.

The processing system 20 and/or the methods of Fig. 8, Fig. 9, and/or Fig. 10 may be operative to use various processing techniques, such as heuristic models, statistical models, and/or Al or ML models to combine the data from different sources that was mapped to a same spatial unit and identified to belong to a same time interval.

The processing system 20 and/or the methods of Fig. 8, Fig. 9, and/or Fig. 10 may be operative to consolidate a spatial location and extent of a hazard identified by the hazard identification. Such a consolidation may include, but is not limited to, the following scenarios:
- Deriving Consolidated Spatial Extent: By considering multiple spatially adjacent reference units, the overall extent of a hazardous phenomenon can be determined. For example:
   - If several adjacent areas (e.g., map tiles, polygons) are identified as experiencing extremely strong winds, these can be merged into a single, larger strong-wind hazard that encompasses the combined area.
   - If multiple road segments along an extended stretch of freeway are found to be slippery, but a few short segments interrupt this sequence, a decision may be made to issue a single alert for the entire stretch, including the intermittent segments. This approach minimizes risk for drivers and enhances user experience.
- Enhanced Location Resolution: By analyzing the location information of all individual input data instances collected for a specific reference unit, the precise location of the hazard can be further refined. For instance:
   - If multiple ACI user reports indicate that an accident has occurred on a particular road segment, the locations of these reports can be clustered to identify a more accurate location for the accident along that segment.
   - When ambient weather conditions and SDO data collectively suggest reduced visibility in a specific area, an evaluation of GPS traces from SDO source vehicles can help pinpoint the exact portion of the road network that is affected.
- Improved Location Estimation: Combining the above scenarios by analyzing all individual data instances across multiple adjacent spatial units can improve the accuracy of the estimated hazard location. For example:
   - If several ACI user reports regarding a broken-down vehicle are mapped across two consecutive road segments, clustering the combined set of reports of both allows for a more precise identification of the vehicle's location, potentially pinpointing it near the boundary between the two segments.

The processing system 20 and/or the methods of Fig. 8, Fig. 9, and/or Fig. 10 may be operative to transform a result of the hazard identification into a target reference system. While a specific spatial reference system may have been established for the internal evaluation process, this choice may not necessarily be the most convenient or suitable for delivering output based on the hazard identification to downstream clients. To address this, the processing system 20 and/or the methods of Fig. 8, Fig. 9, and/or Fig. 10 may be operative to translate the outcomes of the multi-source data fusion process to a different target spatial reference system. Examples include, but are not limited to:
- A downstream application may require hazard content to be provided in relation to a specific tiling system, while the internal evaluation processes utilize a map-based referencing system. Once a critical number of map segments within a given tile are identified as experiencing a particular hazardous condition, a corresponding alert may be issued for the entire tile.
- The delivered hazard content may be desired to be map-agnostic:
   - The identified position of a broken-down vehicle along a road segment in the internal map (using a point-along-line reference) could be converted to absolute geographic coordinates for direct delivery.
   - After identifying a sequence of consecutive road segments within the internal map that are all subject to a specific hazard, the resulting line stretch may be represented as a series of geographic coordinates. Alternatively, this line stretch could be expressed in a standardized map-agnostic geo-referencing system, such as OpenLR, which is a technique providing procedures and formats for encoding, transmission, and decoding of local data irrespective of the map.

The processing system 20 and/or the methods of Fig. 8, Fig. 9, and/or Fig. 10 may be operative to process probe data indicative of vehicle speeds to perform a hazard classification, determine a hazard severity and/or determine a confidence in the hazard classification.

Fig. 11 is a schematic representation illustrating mean probe speeds 98 as a function of location (e.g., for each of several adjacent navigable segments on a same road). A spatial and/or temporal decrease 99 determined based on probe speed statistics 98 can be utilized to perform a hazard classification, determine a hazard severity and/or determine a confidence in the hazard classification. In particular, probe speed-based techniques have been determined to be particularly suitable to determine a quantitative quality measure for a result of the hazard identification.

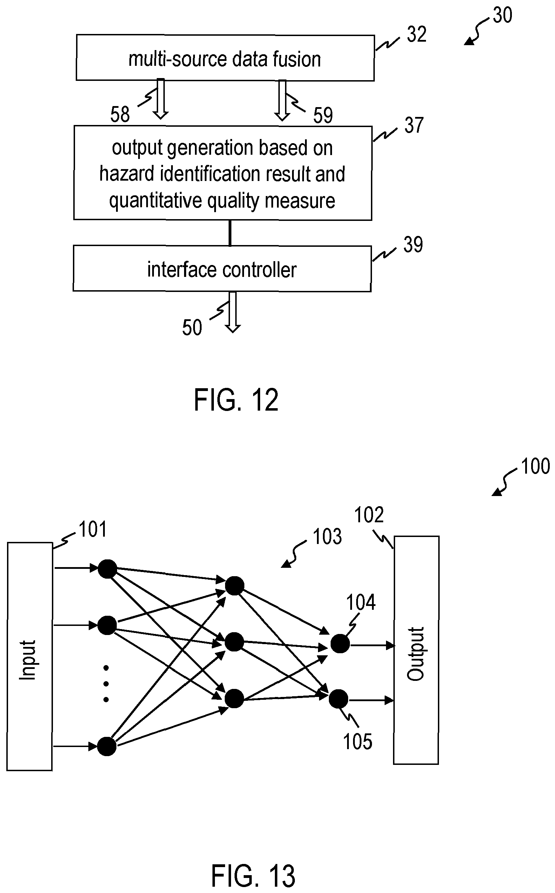

Fig. 12 is a schematic partial representation of the hazard identification 30 implemented by the at least one processing circuit 22. The multi-source data fusion 32 may provide not only a hazard classification and/or severity 58, but also a quantitative quality measure 59. The hazard identification 30 may implement an output generation 37 that is based on both the hazard classification and/or severity 58, and on the quantitative quality measure 59. The interface controller 39 may, thus, be operative to cause output to be transmitted that is dependent on both the hazard classification and/or severity 58, and on the quantitative quality measure 59.

Fig. 13 is a schematic representation of an Al model 100 that may be used by the processing system 20 or the method to generate output that comprises a quantitative quality measure for a hazard (e.g., for a hazard classification). The Al model 100 may be an ML model 100. The Al model 100 has an input 101 (such as an input layer), an output 102 (such as an output layer 102), and several hidden layers and/or cells 103 (such as gated recurrent units (GRUs) and/or long short term memory (LSTM) cells). The Al model 100 is operative to (e.g., by means of training) provide output that comprises both a hazard identification result 104 (such as a hazard classification and/or a hazard severity) and a quantitative quality measure 105 for the hazard identification result 104. Several Al model structures can be used to provide classification results along with measures of confidence or uncertainty. Bayesian models, such as Bayesian neural networks, inherently quantify uncertainty by incorporating prior distributions and yielding probabilistic predictions. Ensemble methods, like Random Forests, can also provide confidence scores based on the variance in predictions across multiple trees, indicating uncertainty in the classification. Additionally, outputs from deep learning (DL) models (e.g., in classification problems) can provide probability distributions across classes, allowing for the extraction of both the predicted class and the associated confidence score.

The processing system 20 and/or the method for hazard identification may be operative to generate input features for the Al model 100 based on the data 40 received from the several sources, and mapped to the same spatial unit and pertaining to the same time interval 77. The input features may be based on probe data, such as probe speeds, without being limited thereto.

Alternatively or additionally to Al-based techniques, the processing system 20 and/or the method for hazard identification may be operative to establish a quantitative quality measure for the hazard identification based on probe speed dynamics, e.g., probe speed statistics.

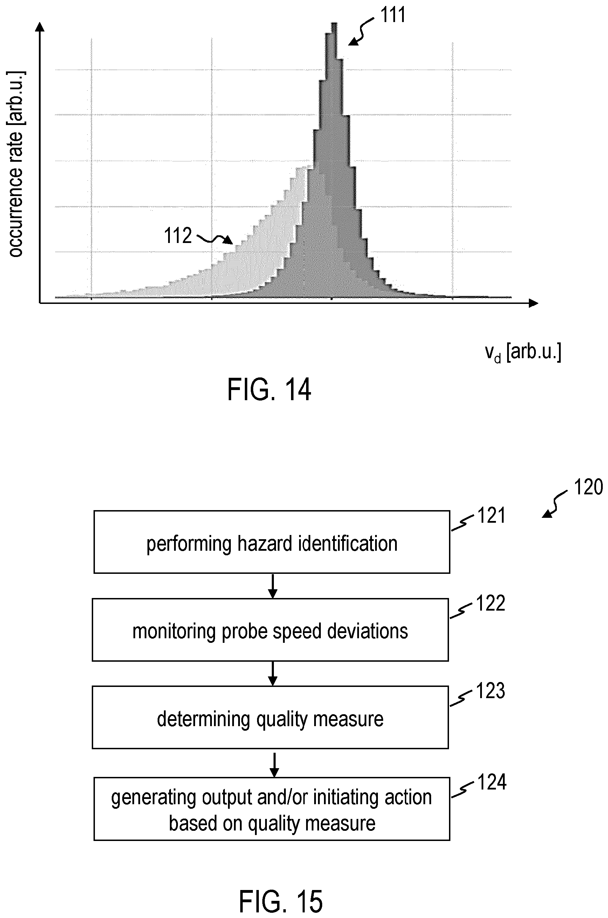

Fig. 14 illustrates probe speed distributions of normalized probe speeds. The normalized probe speeds are determined as deviation from a baseline speed (e.g., a permitted travel speed for the respective navigable segment), normalized by the baseline speed. A baseline distribution 111 is representative of a case in which there is no hazard. Presence of a hazard results in a modified probe speed distribution 112. The modified probe speed distribution 112 may exhibit a shift of its maximum to a greater negative deviation from the permitted speed. The modified probe speed distribution 112 may also exhibit a more pronounced tail towards lower speeds (i.e., greater negative deviations from the baseline speed). These characteristics may be used to determine a quantitative quality measure for the hazard identification.

Fig. 15 is a flow chart of a method 120 of performing a hazard identification. The method 120 may be performed by or using the processing system 20, or by or using the system 10.

At process block 121, the hazard identification is performed. Process block 120 may be implemented as described with reference to any one of Fig. 8, Fig. 9, or Fig. 10, or as described with reference to any of the other techniques disclosed herein.

At process block 122, the processing system 20 monitors probe speed deviations for a spatial unit (e.g., at least one navigable segment and/or at least one tile and/or at least one hexagonal cell) determined to have a hazard situation. Monitoring the probe speed deviations may comprise generating probe speed statistics. The probe speed statistics may comprise a normalized probe speed statistics determined as deviation from a baseline speed (e.g., a permitted travel speed for the respective navigable segment), normalized by the baseline speed.

At process block 123, the processing system 20 determines the quantitative quality measure based at least on the probe speed statistics. The quantitative quality measure may be determined based on at least one threshold comparison that is based on the probe speed deviations.

At process block 124, output is generated based on both the hazard identification result and the quantitative quality measure, to initiate or perform an action.

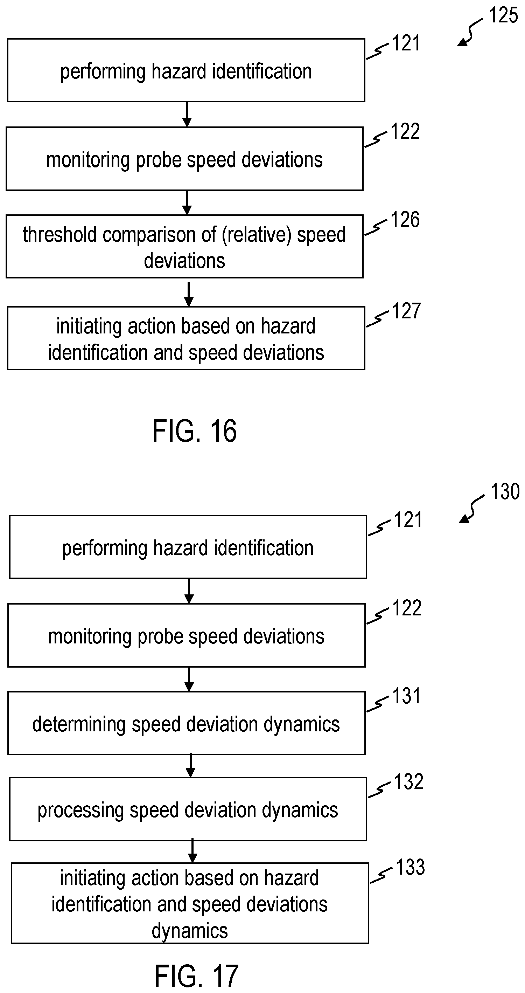

Fig. 16 is a flow chart of a method 125 of performing a hazard identification. The method 125 may be performed by or using the processing system 20, or by or using the system 10.

Process blocks 121 and 122 may be implemented as described with reference to Fig. 15.

At process block 126, the processing system 20 performs a threshold comparison for probe speed deviations for a spatial unit (e.g., at least one navigable segment and/or at least one tile and/or at least one hexagonal cell) determined to have a hazard situation. The threshold comparison may comprise determining a normalized probe speed deviation based on a difference between the probe speed and a baseline speed (which may be determined based on the baseline distribution 111 and/or based on the permitted speed for the respective spatial unit), and dividing the difference by the baseline speed for normalization. The normalized probe speed deviation may then be compared to a threshold. The threshold may be fixed. The threshold comparison may be used to establish a quantitative quality measure for the hazard identification.

At process block 127, the processing system 20 generates output based on both the hazard identification result and the threshold comparison of the probe speed deviations, to initiate or perform an action.

Fig. 17 is a flow chart of a method 130 of performing a hazard identification. The method 130 may be performed by or using the processing system 20, or by or using the system 10.

Process blocks 121 and 122 may be implemented as described with reference to Fig. 15.

At process block 131, the processing system 20 establishes probe speed deviation dynamics for a spatial unit (e.g., at least one navigable segment and/or at least one tile and/or at least one hexagonal cell) determined to have a hazard situation. Establishing the probe speed deviation dynamics may comprise establishing statistics (e.g., a distribution) of normalized probe speed deviations. The normalized probe speed deviations may be determined based on a difference between the probe speed and a baseline speed (which may be determined based on the baseline distribution 111 and/or based on the permitted speed for the respective spatial unit), and dividing the difference by the baseline speed for normalization. The processing system 20 may evaluate a shape of the distribution to establish a quantitative quality measure for the hazard identification.

At process block 132, the processing system 20 generates output based on both the hazard identification result and the probe speed deviation dynamics or distribution, to initiate or perform an action.

The processing system 20 and/or the methods of Fig. 15, Fig. 16, and Fig. 17 are operative to address the challenge of quantifying a quality of hazard identification results. Measuring the quality of hazard alerts presents significant challenges, which can be addressed by the embodiments. Independent and reliable reference data is often difficult to obtain, and the phenomena in question are typically transient and volatile. Legacy techniques for a verification or falsification of a hazard alert frequently rely on indirect indicators rather than definitive ground truth. Moreover, effective methodologies for assessing hazard alert quality are expected to vary considerably across different types of hazards.

While test drives can yield insights into the quality of real-time services, the unpredictable nature of hazard occurrences limits their effectiveness in capturing a statistically significant number of events. Additionally, the time delay and/or environmental impact associated with conducting test drives can be substantial.

The processing system 20 and/or the methods of Fig. 15, Fig. 16, and/or Fig. 17 may be operative to perform a speed-based method for estimating the precision of issued hazard-alerts, to thereby mitigate at least some of the challenges outlined above. To quantify the hazard content quality, the processing system 20 and/or the methods (e.g., of Fig. 15, Fig. 16, and/or Fig. 17) may evaluate the precision of hazard alerts of a given type by measuring their correlation with systematic speed-drops that are observed on the affected map-segments during the alerted periods.

Particularly weather-related hazards like slippery roads or strongly reduced visibility are expected to have a potentially strong impact on the speeds of vehicles passing through the affected network.

Any observed reduction of the mean speed derived from FCD on a given map-segment during a period where an alert was issued for that segment might therefore be interpreted as a confirmation of that alert. If, in turn, no statistically significant reduction compared to the baseline (i.e., "typical") speed on that segment was visible whatsoever - or if the mean speed during the alerted period was even higher than observed normally - this can be interpreted such that the alert was likely wrong.
- For a map-segment that has been affected by a hazard of the considered type for a certain period of time on a given day (according to the TT service), derive the mean vehicle-speed during that period from the collected GNSS (e.g., global positioning system (GPS)) probe data.
- For that same segment, same day-time period and same day-of-the-week check for a certain number of preceding and/or succeeding other weeks, whether the segment was free of hazards during these reference periods.
- Any such reference-period that was free of hazards is accepted as a baseline-period: Also determine the mean vehicle-speed during each of the baseline-periods from the corresponding GNSS (e.g., GPS) data.
- It is expected that the mean-speed over these hazard-free baseline-periods belonging to a single hazard period represents the typical local speed under normal conditions and that the mean speed determined during the alleged hazardous period itself deviates from that speed - if the service was correct and there really was a hazard.
- The processing system 20 and/or the methods of Fig. 15, Fig. 16, and/or Fig. 17 may be operative to evaluate the speed-deviations of multiple alleged hazardous periods from their corresponding baseline speeds to statistically estimate the fraction of the hazard-alerts that were correct - since they showed a speed-deviation that is beyond what is statistically expected within normal variability under normal conditions.
- Given the speed-deviation-statistics, this concrete evaluation can be calculated in different ways, e.g.:
   - One technique may be based on a threshold. When an issued hazard coincides with a (relative) speed-deviation above the threshold, it is considered true.
   - Another technique may use the normalized speed-deviation-distributions of the baseline-periods and the alleged hazard-periods to estimate the contribution of false-positives to the latter.

As a result, the processing system 20 and/or the methods of Fig. 15, Fig. 16, and/or Fig. 17 allow a fraction of correctly issued hazard alerts among all issued alerts to be ascertained. I.e., the precision can be estimated. Thereby, an aspect of the service quality is assessed.

The processing system 20 and/or the methods for hazard identification according to embodiments may be used in combination with various services and/or applications that use the output 50 of the hazard identification and/or of the processing system 20. Non-limiting examples include hazard alert or warning systems (e.g., in association with vehicles and/or probes), adjustments of assistance function operation in vehicles, and/or adjustments of L1-L4 autonomous vehicle operation.

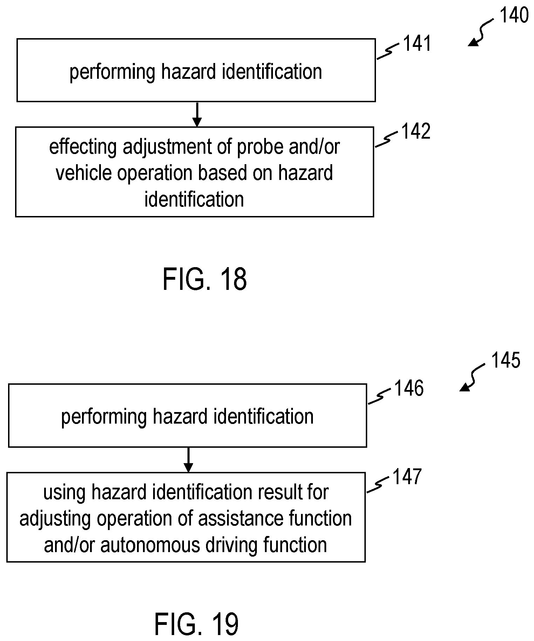

Fig. 18 is a flow chart of a method 140 according to an embodiment. The method 140 may be performed by or using the processing system 20, or by or using the system 10.

At process block 141, a hazard identification is performed using the processing system 20 and/or the method of identifying hazards according to any aspect or embodiment disclosed herein.

At process block 142, probe and/or vehicle operation is controlled based on the hazard identification. This may comprise controlling an HMI for alert and/or warning generation, and/or modifying control logic operation of the probe and/or vehicle based on the identified hazard.

Fig. 19 is a flow chart of a method 145 according to an embodiment. The method 140 may be performed by or using the processing system 20, or by or using the system 10.

At process block 146, a hazard identification is performed using the processing system 20 and/or the method of identifying hazards according to any aspect or embodiment disclosed herein.

At process block 147, operation of an assistance function and/or of an autonomous driving function (e.g., of a L1-L4 autonomous driving function) may be adjusted based on the hazard identification result. This may comprise adjusting, based on the hazard identification, the way in which a control logic of the vehicle processes input data to perform automatic control operations in the vehicle.

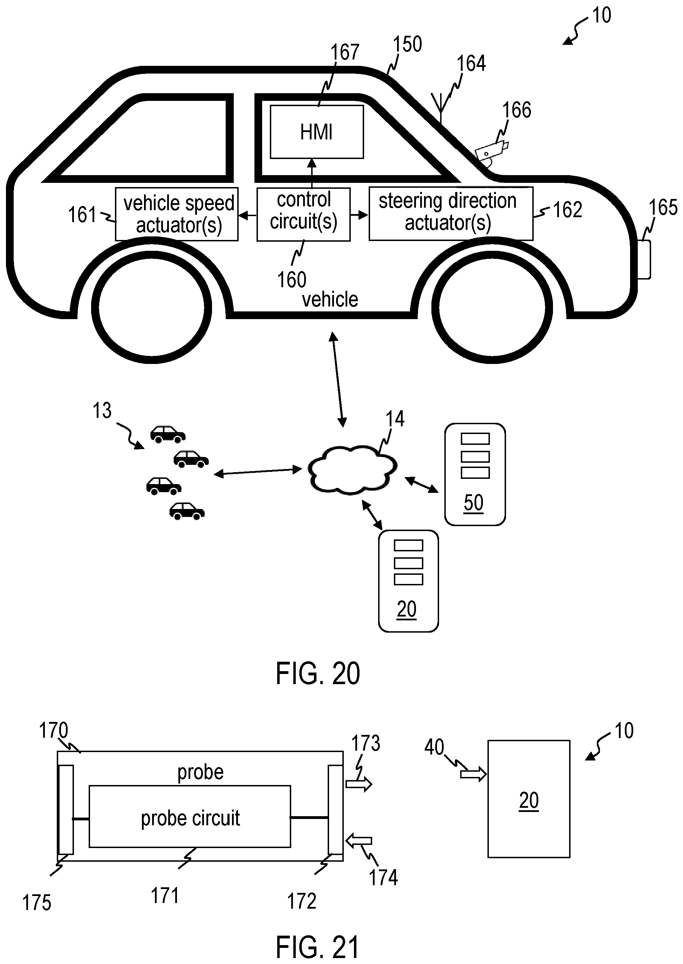

Fig. 20 is a schematic representation of a system 10. The system 10 comprises the processing system 20 and a vehicle 150.

The system 10 comprises the vehicle 150. The vehicle 150 comprises at least one control circuit 160 (i.e., one or several control circuits 160). The at least one control circuit 160 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The vehicle 150 comprises a wireless interface 164 operative to receive hazard-related data generated by the processing system 20, or by an application or service that uses the hazard-related data generated by the processing system 20.

The at least one control circuit 160 may be operative to perform one or several control operations based on the hazard-related data. For illustration, the at least one control circuit 160 may be operative to use the hazard-related data to control an HMI 167 of the vehicle 150 to output an alert and/or warning.

Alternatively or additionally, the at least one control circuit 160 may be operative to control one or several actuators of the vehicle 150 based on the received hazard-related data. The one or several actuators may comprise a vehicle speed actuator 161 which is operative to be actuated to influence the vehicle speed or engine torque, and/or a steering direction actuator 162 which is operative to be actuated to influence a driving direction of the vehicle 150, and/or a braking logic (e.g., of an electronic braking system). The at least one control circuit 160 may be operative to perform an ADAS function and/or autonomous driving function based on the received hazard-related data. The ADAS function and/or autonomous driving function may comprise an actuator control operation in which at least one vehicle actuator is controlled.

The at least one control circuit 160 may be operative to perform the ADAS function and/or autonomous driving function based on both the hazard-related data received via the interface 164 and sensor data captured using one or several onboard a vehicle sensors 165, 166. The vehicle sensor(s) may comprise a distance sensor 165 and/or at least one camera 166. For illustration, the at least one control circuit 160 may be operative to use the hazard-related data to determine how (i.e., by means of which processing logic) sensor data captured by the vehicle sensor(s) 165, 166 are to be processed to generate control signals for the at least one actuator.

Fig. 21 is a schematic representation of a system 10 that comprises the processing system 20 and a probe 170. The probe 170 comprises a probe circuit 171, which may comprise one or several integrated circuits, and a probe interface 172, which may comprise a wireless probe interface. The probe 170 is operative to provide probe data 173 for use by the at least one processing system 20 in performing the hazard identification. The probe 170 is operative to receive hazard-related data 174 that is based on the hazard identification performed by the processing system 20. The probe circuit 171 is operative to perform one or several actions based on the hazard-related data 174, such as causing an alert or warning to be output via an HMI 175 of the probe 170.

The processing system and/or methods disclosed herein provide improvements in relation to hazard identification.

While embodiments have been described with reference to the drawings, modifications and alterations may be implemented in other embodiments. While exemplary use cases in which the methods and vehicle processing system can be applied have been described in detail, the techniques disclosed herein may be used in association with a variety of additional scenarios.

For illustration, while embodiments have been described in which the processing system 20 is implemented as an apparatus, the processing system 20 may also be implemented as a distributed processing system comprising several computers and/or servers communicatively interfaced with each other.

For further illustration, the processing system and methods may be operative to restrict application of the probe data processing disclosed herein to segments on which lane-dependent effects on probe speed dominate over short-scale temporal variations of probe speed. The latter scenario may exist in proximity to a traffic light and/or a junction, where probe speeds are affected more by traffic light state and/or traffic flow at the roads connected to the junction, rather than by choice of lane. Thus, the processing system 20 and methods disclosed herein may be operative to determine, for a segment of the navigable network 91 and based on the electronic map data 24, whether a traffic light is arranged at the segment and/or whether the segment ends at a junction (in which case temporal variations of probe speed may be more dominant than lane-dependent effects), and performing the probe speed clustering techniques disclosed herein selectively responsive to verifying that no traffic light is arranged at the segment and the segment does not end at a junction.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of identifying hazards in a navigable network (61), the method comprising:
performing, by at least one processing system (20), a hazard identification,
wherein the hazard identification comprises a multi-source data fusion of data (40; 41, 42, 43) obtained from several sources (50);
wherein the multi-source data fusion comprises a spatiotemporal correlation of the data, the spatiotemporal correlation being performed for different ones of the several sources (50) with the at least one processing system being operative to:
perform, for at least some of the several sources (50), a spatial transform to a common spatial reference for spatially correlating the data (40; 41, 42, 43); and
apply, for temporally correlating the data, a time-based filter to identify which of the data (40; 41, 42, 43) obtained from the several sources (50) is to be processed in combination in the hazard identification; and
performing or enabling, by the at least one processing system (20), an action based at least on the hazard identification.

2. The method of claim 1, wherein the at least one processing system (20) is operative to:
perform the spatial transform comprising a mapping between (i) network-referential data (41) obtained from at least one of the several sources (50), the network-referential data (41) being spatially referenced to navigable segments of the navigable network (61), and (ii) cell-referential data (42) from at least another one of the several sources (50), the cell-referential data (42) being spatially referenced to a cell set that overlaps with the navigable network (61); and
apply the time-based filter to discard a part of the data (40; 41, 42, 43) in performance of the hazard identification.

3. The method of claim 1 or claim 2, wherein the time-based filter comprises a sliding time window (77), and wherein the at least one processing system (20) deletes part of the data (40; 41, 42, 43) obtained from the several sources (50) from a data repository (24) responsive to determining that the part relates to times earlier than a start time of the sliding time window (77).

4. The method of claim 3, wherein the sliding time window (77) has a time window length and wherein the at least one processing system (20) is operative to adjust the time window length.

5. The method of claim 4, wherein the at least one processing system (20) adjusts the time window length based on one or both of:
a type of hazard to be identified in the hazard identification;
source types of the several sources (50) from which the data (40; 41, 42, 43) are obtained to perform the hazard identification.

6. The method of any one of the preceding claims, wherein the several sources (50) comprise at least one probe data source (53) and at least one additional data source (51, 52) different from the at least one probe data source (53), wherein the multi-source data fusion combines probe data (43) from the at least one probe data source (53) and additional data (41, 42) from the at least one additional data source (51, 52).

7. The method of claim 6, wherein the probe data (43) comprise and/or are based on probe traces and/or probe speeds of probes (13) located on the navigable network (61), wherein the at least one processing system (20) processes the probe data (51) in the hazard identification.

8. The method of any one of the preceding claims, wherein the hazard identification comprises determining, based on the data (40) from the several sources (50), a quantitative quality measure (59; 105) for a hazard identification result (58; 104) of the hazard identification.

9. The method of claim 8 when dependent on claim 6 or claim 7, wherein the at least one processing system (20) determines the quantitative quality measure (59; 105) based at least on the probe data for probes (13) located on a navigable segment of the navigable network (61) affected by a hazard identified in the hazard identification.

10. The method of any one of the preceding claims, further comprising repeating, by the at least one processing system (20), the hazard identification.

11. The method of claim 10, wherein the at least one processing system (20) repeats the hazard identification in an ongoing manner, optionally wherein the at least one processing system (20) repeats the hazard identification responsive to a trigger, further optionally wherein the trigger comprises a trigger event and/or expiry of a timer.

12. The method of any one of the preceding claims, wherein the hazard identification comprises determining one, several, or all of: a hazard classification; a hazard severity; a measure of an impact on driver behavior; a recommendation for driving adaptation; adjustments to an advanced driver assistance system, ADAS; autonomous driving settings.

13. A machine-readable instruction code (27) which, upon execution by at least one processing circuit (22) of a processing system (20), causes the at least one processing system (20) to perform the method of any one of the preceding claims.

14. A processing system (20) for identifying hazards in a navigable network (61), the processing system (20) comprising:
at least one interface (21) operative to obtain data (40) from several sources (50); and
at least one processing circuit (22) operative to perform a hazard identification comprising a multi-source data fusion of the data (40) obtained from the several sources (50);
the processing system (20) being operative such that the multi-source data fusion comprises a spatiotemporal correlation of the data, the spatiotemporal correlation being performed for different ones of the several sources (50) with the at least one processing system (20) being operative to:
perform, for at least some of the several sources (50), a spatial transform to a common spatial reference for spatially correlating the data; and
apply, for temporally correlating the data, a time-based filter to identify which of the data obtained from the several sources (50) is to be processed in combination in the hazard identification; and
the processing system (20) being operative to perform or enable an action based at least on the hazard identification.

15. A system (10), comprising:
several sources (50) of data (40);
a communication system (14); and
the processing system (20) of claim 14 communicatively interfaced with the several sources (50) over the communication system (14) and operative to process the data (40) to perform the hazard identification.
